# EUROPEAN PATENT APPLICATION

(11) **EP 4 848 869 A1**
(43) Date of publication of application: **02.12.2026**
(21) Application number: 25751212.9
(22) Date of filing: 21.01.2025
(51) Int. Cl.: H04W 74/00

(54) **COMMUNICATION METHOD, APPARATUS AND SYSTEM, AND STORAGE MEDIUM AND PROGRAM PRODUCT**

(30) Priority: 08.02.2024 CN 202410178323
(71) Applicant: Huawei Technologies Co., Ltd., Shenzhen, Guangdong 518129 (CN)
(72) Inventor: LI, Kuikui, Shenzhen, Guangdong 518129 (CN); SUN, Fei, Shenzhen, Guangdong 518129 (CN)
(74) Representative: Huawei European IPR
(86) International application number: PCT/CN2025/073781
(87) International publication number: WO 2025/167610

(57) **Abstract**

A communication method, apparatus, and system, a storage medium, and a program product are provided. The communication method includes: determining a first target policy and/or a second target policy, where the first target policy indicates a communication function split manner of a first target entity and a second target entity, and the second target policy indicates a communication function split manner of the second target entity and a third target entity; and sending first information, where the first information indicates the first target policy and/or the second target policy. In embodiments of this application, one or more target policies are determined, to flexibly split communication functions corresponding to different function entities. Corresponding function entities may flexibly adjust, based on different target policies, communication functions corresponding to the function entities, to adapt to quality of service requirements of different services, improve bandwidth utilization and compute resource utilization, and reduce deployment costs.

## Description

This application claims priority to Chinese Patent Application No. 202410178323.3, filed with the China National Intellectual Property Administration on February 8, 2024 and entitled "COMMUNICATION METHOD, APPARATUS, AND SYSTEM, STORAGE MEDIUM, AND PROGRAM PRODUCT", which is incorporated herein by reference in its entirety.

### TECHNICAL FIELD

This application relates to the communication field, and in particular, to a communication method, apparatus, and system, a storage medium, and a program product.

### BACKGROUND

A 4th generation (4th generation, 4G) mobile network base station is split into two parts: a baseband unit (baseband Unit, BBU) and a remote radio unit (remote radio unit, RRU) for deployment in a lower-layer split manner. A 5th generation (5th generation, 5G) mobile network base station is split into two function entities: a central unit (central unit, CU) and a distributed unit (distributed unit, DU) in a higher-layer split manner.

Currently, function split of the 5G base station has poor adaptability. Therefore, a solution with better performance is urgently needed.

### SUMMARY

Embodiments of this application provide a communication method, apparatus, and system, a storage medium, and a program product. One or more target policies are determined, so that different function entities can flexibly adjust, based on different target policies, communication functions corresponding to the different function entities, to adapt to quality of service requirements of a plurality of types of different service traffic.

To achieve the foregoing objectives, this application uses the following technical solutions.

According to a first aspect, a communication method is provided. The method may be applied to a first function entity side, for example, a first function entity or a component (for example, a circuit, a chip, or a chip system) in the first function entity. The method may include: determining a first target policy and/or a second target policy, where the first target policy indicates a communication function split manner of a first target entity and a second target entity, and the second target policy indicates a communication function split manner of the second target entity and a third target entity; and sending first information, where the first information indicates the first target policy and/or the second target policy.

In embodiments of this application, one or more target policies are determined, to flexibly split communication functions corresponding to different function entities. Corresponding function entities may flexibly adjust, based on different target policies, communication functions corresponding to the function entities, to adapt to quality of service requirements of different services, improve bandwidth utilization and compute resource utilization, and reduce deployment costs.

In a possible design, the method further includes: determining a first target function split manner from at least one candidate function split manner, where the first target function split manner has an association relationship with the first target policy; and/or determining a second target function split manner from at least one candidate function split manner, where the second target function split manner has an association relationship with the second target policy, where the candidate function split manner is a communication function split manner of two communicatively connected second function entities of different types, and the second function entity includes at least one of the first target entity, the second target entity, and the third target entity.

In embodiments of this application, a plurality of candidate function split manners are provided in advance, and a split manner corresponding to the target policy is selected from the plurality of candidate function split manners. This reduces calculation complexity of dynamically configuring the target policy, and can also avoid improper split of the communication function.

In a possible design, determining the first target policy and/or the second target policy includes: determining the first target policy and/or the second target policy based on one or more of second information corresponding to a first interface, second information corresponding to a second interface, fourth information, third information corresponding to the first target entity, third information corresponding to the second target entity, and third information corresponding to the third target entity, where the first interface is a communication interface between the first target entity and the second target entity, the second interface is a communication interface between the second target entity and the third target entity, the second information indicates a network communication status corresponding to the communication interface, the third information indicates a processing resource status corresponding to the function entity, and the fourth information indicates a quality of service (quality of service, QoS) requirement corresponding to at least one service.

In embodiments of this application, the target policy may be comprehensively determined based on dimensions such as a network communication status of a communication interface, a processing resource status of a function entity, and a QoS requirement of a service. In this way, a communication function corresponding to the function entity is more properly split.

In a possible design, determining the first target policy and/or the second target policy based on one or more of the second information corresponding to the first interface, the second information corresponding to the second interface, the fourth information, the third information corresponding to the first target entity, the third information corresponding to the second target entity, and the third information corresponding to the third target entity includes: determining the first target policy and/or the second target policy based on a relationship between at least one threshold and one or more of the second information corresponding to the first interface, the second information corresponding to the second interface, the fourth information, the third information corresponding to the first target entity, the third information corresponding to the second target entity, and the third information corresponding to the third target entity.

In embodiments of this application, the target policy may be comprehensively determined based on a threshold and information in a plurality of dimensions. In this way, a communication function corresponding to the function entity is more properly split.

In a possible design, the first target policy indicates that a communication function of the first target entity includes radio resource control (radio resource control, RRC), the second target policy indicates that a communication function of the second target entity includes packet data convergence protocol (packet data convergence protocol, PDCP), radio link control (radio link control, RLC), media access control (media access control, MAC), and high physical layer (high physical layer, HIGH PHY), and the second target policy indicates that a communication function of the third target entity includes low physical layer (low physical layer, LOW PHY); the first target policy indicates that a communication function of the first target entity includes RRC and PDCP, the second target policy indicates that a communication function of the second target entity includes RLC, MAC, and HIGH PHY, and the second target policy indicates that a communication function of the third target entity includes LOW PHY; the first target policy indicates that a communication function of the first target entity includes RRC, PDCP, and RLC, the second target policy indicates that a communication function of the second target entity includes MAC and HIGH PHY, and the second target policy indicates that a communication function of the third target entity includes LOW PHY; the first target policy indicates that a communication function of the first target entity includes RRC, PDCP, RLC, and MAC, the second target policy indicates that a communication function of the second target entity includes HIGH PHY, and the second target policy indicates that a communication function of the third target entity includes LOW PHY; or the first target policy indicates that a communication function of the first target entity includes RRC, PDCP, RLC, MAC, and HIGH PHY, and the first target policy indicates that a communication function of the second target entity includes LOW PHY.

Embodiments of this application provide a plurality of split manners of communication functions corresponding to function entities, which may be applied to QoS requirements of different services.

In a possible design, determining the first target policy and/or the second target policy includes: determining, for different terminals, the first target policy and/or the second target policy corresponding to any terminal; determining, for different protocol data unit (protocol data unit, PDU) sessions, the first target policy and/or the second target policy corresponding to any PDU session; determining, for different QoS flows, the first target policy and/or the second target policy corresponding to any QoS flow; determining, for different data radio bearers (data radio bearer, DRB), the first target policy and/or the second target policy corresponding to any DRB; or determining, for different data packets, the first target policy and/or the second target policy corresponding to any data packet.

In embodiments of this application, target policies at different granularities may be determined, so that a communication function can be flexibly adjusted at a corresponding granularity.

In a possible design, the method further includes: sending the at least one candidate function split manner; and/or sending fifth information, where the fifth information indicates a communication function of each function entity corresponding to the candidate function split manner.

In embodiments of this application, a plurality of candidate function split manners and/or corresponding communication functions may be further notified to another function entity in advance, so that only some information needs to be indicated when a target policy is indicated, thereby reducing resource overheads in a communication process.

In a possible design, the first function entity, the first target entity, the second target entity, and the third target entity are function entities that are independent of each other; or the first function entity is integrated into the first target entity, the second target entity, or the third target entity.

Embodiments of this application provide a plurality of deployment manners of the first function entity, to be applicable to a plurality of possible network architectures.

In a possible design, the first target entity, the second target entity, and the third target entity are function entities in a radio access network (radio access network, RAN), a core network, and/or a network management domain.

In embodiments of this application, a plurality of communication functions such as the radio access network, the core network, and the network management domain may be dynamically split, thereby improving universality.

In a possible design, the first target entity, the second target entity, and the third target entity are the function entities in the RAN, and the function entity in the RAN includes at least one of the following function entities: a CU, a DU, or a radio unit (radio unit, RU).

In embodiments of this application, flexible adjustment of communication functions of a plurality of function entities such as the CU, the DU, and the RU in the RAN is implemented, to adapt to quality of service requirements of different services, improve bandwidth utilization and compute resource utilization, and reduce deployment costs of different function entities in the RAN.

In a possible design, the first information includes at least one of the following parameters: a first identifier, where the first identifier indicates the first target policy; a second identifier, where the second identifier indicates the second target policy; a function split manner corresponding to the first target policy; a function split manner corresponding to the second target policy; the communication function of the first target entity and the communication function of the second target entity that correspond to the first target policy; the communication function of the second target entity and the communication function of the third target entity that correspond to the second target policy; first granularity information of the first target policy; or second granularity information of the second target policy.

Embodiments of this application provide a plurality of possible parameters included in the first information, so that a corresponding function entity flexibly adjusts, based on the parameters included in the first information, a communication function corresponding to the function entity.

In a possible design, the method further includes: obtaining the second information from the first target entity, the second target entity, and/or the third target entity, where the second information includes at least one of the following parameters: a bandwidth resource of the communication interface, a transmission delay of the communication interface, a packet loss rate of the communication interface, or reliability of the communication interface.

Embodiments of this application provide a plurality of possible parameters included in the second information, so that the first function entity determines an appropriate target policy based on the parameters in the second information.

In a possible design, the method further includes: obtaining the third information from the first target entity, the second target entity, and/or the third target entity, where the third information includes at least one of the following parameters: processor utilization, memory utilization, or disk utilization.

Embodiments of this application provide a plurality of possible parameters included in the third information, so that the first function entity determines an appropriate target policy based on the parameters in the third information.

In a possible design, the method further includes: obtaining the fourth information from the first target entity, the second target entity, the third target entity, and/or a core network device, where the fourth information includes at least one of the following parameters: a packet delay budget (packet delay budget, PDB), a guaranteed bit rate (guaranteed bit rate, GBR), or a packet error rate (packet error rate, PER).

Embodiments of this application provide a plurality of possible parameters included in the fourth information, so that the first function entity determines an appropriate target policy based on the parameters in the fourth information, to meet a plurality of possible QoS requirements.

In a possible design, the communication function split manner is a manner of splitting a communication function corresponding to a protocol layer.

In embodiments of this application, the communication function corresponding to the protocol layer may be flexibly split, so that different function entities configure communication functions corresponding to different protocol layers, to adapt to quality of service requirements of different services.

According to a second aspect, a communication method is provided. The method is applied to a second function entity side, for example, a second function entity or a component (for example, a circuit, a chip, or a chip system) in the second function entity. The second function entity includes at least one of a first target entity, a second target entity, and a third target entity. The method includes: receiving first information from a first function entity, where the first information indicates a first target policy and/or a second target, the first target policy indicates a communication function split manner of the first target entity and the second target entity, and the second target policy indicates a communication function split manner of the second target entity and the third target entity; and configuring, based on the first information, a communication function corresponding to the second function entity.

In embodiments of this application, one or more target policies are used to flexibly split communication functions corresponding to different function entities. Corresponding function entities may flexibly adjust, based on different target policies, communication functions corresponding to the function entities, to adapt to quality of service requirements of different services, improve bandwidth utilization and compute resource utilization, and reduce deployment costs.

In a possible design, the first target policy has an association relationship with a first target function split manner, and the first target function split manner is determined from at least one candidate function split manner; and/or the second target policy has an association relationship with a second target function split manner, and the second target function split manner is determined from at least one candidate function split manner, where the candidate function split manner is a communication function split manner of two communicatively connected second function entities of different types, and the second function entity includes at least one of the first target entity, the second target entity, and the third target entity.

In a possible design, the first target policy and/or the second target policy are/is obtained in the following manner including: obtaining the first target policy and/or the second target policy based on one or more of second information corresponding to a first interface, second information corresponding to a second interface, fourth information, third information corresponding to the first target entity, third information corresponding to the second target entity, and third information corresponding to the third target entity, where the first interface is a communication interface between the first target entity and the second target entity, the second interface is a communication interface between the second target entity and the third target entity, the second information indicates a network communication status corresponding to the communication interface, the third information indicates a processing resource status corresponding to the function entity, and the fourth information indicates a QoS requirement corresponding to at least one service.

In a possible design, obtaining the first target policy and/or the second target policy based on one or more of the second information corresponding to the first interface, the second information corresponding to the second interface, the fourth information, the third information corresponding to the first target entity, the third information corresponding to the second target entity, and the third information corresponding to the third target entity includes: obtaining the first target policy and/or the second target policy based on a relationship between at least one threshold and one or more of the second information corresponding to the first interface, the second information corresponding to the second interface, the fourth information, the third information corresponding to the first target entity, the third information corresponding to the second target entity, and the third information corresponding to the third target entity.

In a possible design, the first target policy indicates that a communication function of the first target entity includes RRC, the second target policy indicates that a communication function of the second target entity includes PDCP, RLC, MAC, and HIGH PHY, and the second target policy indicates that a communication function of the third target entity includes LOW PHY; the first target policy indicates that a communication function of the first target entity includes RRC and PDCP, the second target policy indicates that a communication function of the second target entity includes RLC, MAC, and HIGH PHY, and the second target policy indicates that a communication function of the third target entity includes LOW PHY; the first target policy indicates that a communication function of the first target entity includes RRC, PDCP, and RLC, the second target policy indicates that a communication function of the second target entity includes MAC and HIGH PHY, and the second target policy indicates that a communication function of the third target entity includes LOW PHY; the first target policy indicates that a communication function of the first target entity includes RRC, PDCP, RLC, and MAC, the second target policy indicates that a communication function of the second target entity includes HIGH PHY, and the second target policy indicates that a communication function of the third target entity includes LOW PHY; or the first target policy indicates that a communication function of the first target entity includes RRC, PDCP, RLC, MAC, and HIGH PHY, and the first target policy indicates that a communication function of the second target entity includes LOW PHY.

In a possible design, the first target policy and/or the second target policy correspond/corresponds to any one of different terminals; the first target policy and/or the second target policy correspond/corresponds to any one of different PDU sessions; the first target policy and/or the second target policy correspond/corresponds to any one of different QoS flows; the first target policy and/or the second target policy correspond/corresponds to any one of different DRBs; or the first target policy and/or the second target policy correspond/corresponds to any one of different data packets.

In a possible design, the method further includes: receiving the at least one candidate function split manner; and/or receiving fifth information, where the fifth information indicates a communication function of each function entity corresponding to the candidate function split policy.

In a possible design, the first function entity and the second function entity are function entities that are independent of each other; or the first function entity is integrated into the second function entity.

In a possible design, the second function entity is a function entity in a RAN, a core network, and/or a network management domain.

In a possible design, the second function entity is the function entity in the RAN, and the second function includes at least one of the following function entities: a CU, a DU, or an RU.

In a possible design, the first information includes at least one of the following parameters: a first identifier, where the first identifier indicates the first target policy; a second identifier, where the second identifier indicates the second target policy; a function split manner corresponding to the first target policy; a function split manner corresponding to the second target policy; the communication function of the first target entity and the communication function of the second target entity that correspond to the first target policy; the communication function of the second target entity and the communication function of the third target entity that correspond to the second target policy; first granularity information of the first target policy; or second granularity information of the second target policy.

In a possible design, the method further includes: sending the second information, where the second information includes at least one of the following parameters: a bandwidth resource of the communication interface, a transmission delay of the communication interface, a packet loss rate of the communication interface, or reliability of the communication interface.

In a possible design, the method further includes: sending the third information, where the third information includes at least one of the following parameters: processor utilization, memory utilization, or disk utilization.

In a possible design, the method further includes: sending the fourth information, where the fourth information includes at least one of the following parameters: a PDB, a GBR, or a PER.

In a possible design, the communication function split manner is a manner of splitting a communication function corresponding to a protocol layer.

According to a third aspect, a communication system is provided, and includes a first function entity and a second function entity. The first function entity is configured to determine a first target policy and/or a second target policy, where the first target policy indicates a communication function split manner of a first target entity and a second target entity, and the second target policy indicates a communication function split manner of the second target entity and a third target entity. The first function entity is further configured to send first information to the second function entity, where the first information indicates the first target policy and/or the second target policy, and the second function entity includes the first target entity, the second target entity, and the third target entity. The second function entity is configured to configure, based on the first information, a communication function corresponding to the second function entity.

In embodiments of this application, one or more target policies are determined, to flexibly split communication functions corresponding to different function entities. Corresponding function entities may flexibly adjust, based on different target policies, communication functions corresponding to the function entities, to adapt to quality of service requirements of different services, improve bandwidth utilization and compute resource utilization, and reduce deployment costs.

In a possible design, the first function entity is further configured to: determine a first target function split manner from at least one candidate function split manner, where the first target function split manner has an association relationship with the first target policy; and/or determine a second target function split manner from at least one candidate function split manner, where the second target function split manner has an association relationship with the second target policy, where the candidate function split manner is a communication function split manner of two communicatively connected second function entities of different types, and the second function entity includes at least one of the first target entity, the second target entity, and the third target entity.

In a possible design, the first function entity is further configured to determine the first target policy and/or the second target policy based on one or more of second information corresponding to a first interface, second information corresponding to a second interface, fourth information, third information corresponding to the first target entity, third information corresponding to the second target entity, and third information corresponding to the third target entity, where the first interface is a communication interface between the first target entity and the second target entity, the second interface is a communication interface between the second target entity and the third target entity, the second information indicates a network communication status corresponding to the communication interface, the third information indicates a processing resource status corresponding to the function entity, and the fourth information indicates a QoS requirement corresponding to at least one service.

In a possible design, the first function entity is further configured to determine the first target policy and/or the second target policy based on a relationship between at least one threshold and one or more of the second information corresponding to the first interface, the second information corresponding to the second interface, the fourth information, the third information corresponding to the first target entity, the third information corresponding to the second target entity, and the third information corresponding to the third target entity.

In a possible design, the first target policy indicates that a communication function of the first target entity includes RRC, the second target policy indicates that a communication function of the second target entity includes PDCP, RLC, MAC, and HIGH PHY, and the second target policy indicates that a communication function of the third target entity includes LOW PHY; the first target policy indicates that a communication function of the first target entity includes RRC and PDCP, the second target policy indicates that a communication function of the second target entity includes RLC, MAC, and HIGH PHY, and the second target policy indicates that a communication function of the third target entity includes LOW PHY; the first target policy indicates that a communication function of the first target entity includes RRC, PDCP, and RLC, the second target policy indicates that a communication function of the second target entity includes MAC and HIGH PHY, and the second target policy indicates that a communication function of the third target entity includes LOW PHY; the first target policy indicates that a communication function of the first target entity includes RRC, PDCP, RLC, and MAC, the second target policy indicates that a communication function of the second target entity includes HIGH PHY, and the second target policy indicates that a communication function of the third target entity includes LOW PHY; or the first target policy indicates that a communication function of the first target entity includes RRC, PDCP, RLC, MAC, and HIGH PHY, and the first target policy indicates that a communication function of the second target entity includes LOW PHY.

In a possible design, the first function entity is further configured to: determine, for different terminals, the first target policy and/or the second target policy corresponding to any terminal; determine, for different PDU sessions, the first target policy and/or the second target policy corresponding to any PDU session; determine, for different QoS flows, the first target policy and/or the second target policy corresponding to any QoS flow; determine, for different DRBs, the first target policy and/or the second target policy corresponding to any DRB; or determine, for different data packets, the first target policy and/or the second target policy corresponding to any data packet.

In a possible design, the system further includes: The first function entity sends the at least one candidate function split manner to the second function entity; and/or the first function entity sends fifth information to the second function entity, where the fifth information indicates a communication function of each function entity corresponding to the candidate function split manner.

In a possible design, the first function entity, the first target entity, the second target entity, and the third target entity are function entities that are independent of each other; or the first function entity is integrated into the first target entity, the second target entity, or the third target entity.

In a possible design, the second function entity is a function entity in a RAN, a core network, and/or a network management domain.

In a possible design, the second function entity is the function entity in the RAN, and the function entity in the RAN includes at least one of the following function entities: a CU, a DU, or an RU.

In a possible design, the first information includes at least one of the following parameters: a first identifier, where the first identifier indicates the first target policy; a second identifier, where the second identifier indicates the second target policy; a function split manner corresponding to the first target policy; a function split manner corresponding to the second target policy; the communication function of the first target entity and the communication function of the second target entity that correspond to the first target policy; the communication function of the second target entity and the communication function of the third target entity that correspond to the second target policy; first granularity information of the first target policy; or second granularity information of the second target policy.

In a possible design, the system further includes: The second function entity sends the second information to the first function entity, where the second information includes at least one of the following parameters: a bandwidth resource of the communication interface, a transmission delay of the communication interface, a packet loss rate of the communication interface, or reliability of the communication interface.

In a possible design, the system further includes: The second function entity sends the third information to the first function entity, where the third information includes at least one of the following parameters: processor utilization, memory utilization, or disk utilization.

In a possible design, the system further includes: The second function entity and/or a core network device sends the fourth information to the first function entity, where the fourth information includes at least one of the following parameters: a PDB, a GBR, or a PER.

In a possible design, the communication function split manner is a manner of splitting a communication function corresponding to a protocol layer.

According to a fourth aspect, a communication apparatus is provided. The communication apparatus is configured to implement various communication methods in the first aspect and/or the second aspect. The communication apparatus includes a corresponding module, unit, or means (means) for implementing the foregoing communication method. The module, unit, or means may be implemented by hardware, software, or hardware executing corresponding software. The hardware or the software includes one or more modules or units corresponding to the foregoing functions.

According to a fifth aspect, a communication apparatus is provided. The communication apparatus includes at least one processor, configured to support the communication apparatus in implementing the function in any one of the foregoing aspects.

In a possible design, the communication apparatus further includes a memory, and the memory is configured to store program instructions and/or data necessary for the communication apparatus.

In a possible design, the communication apparatus further includes a communication interface. The communication interface is configured to: receive and/or send a signal, or the communication interface is configured to perform communication between the processor and another apparatus or component.

According to a sixth aspect, a communication apparatus is provided, and includes at least one processor and a communication interface. The communication interface is configured to: receive and/or send a signal, and the processor is configured to enable the communication method according to any one of the foregoing aspects to be performed.

According to a seventh aspect, a communication apparatus is provided. The communication apparatus includes at least one processor and a memory. The memory is configured to store computer instructions, and when the processor executes the instructions, the communication apparatus is enabled to perform the communication method according to any one of the foregoing aspects.

According to an eighth aspect, a chip system is provided. The chip system includes a processor and an input/output port. The processor is configured to implement a processing function related to the communication method according to any one of the foregoing aspects, and the input/output port is configured to implement a transceiver function related to the communication method according to any one of the foregoing aspects.

In a possible design, the chip system further includes a memory, and the memory is configured to store program instructions and data for implementing a function related to the communication method according to any one of the foregoing aspects.

The chip system may include a chip, or may include a chip and another discrete component.

According to a ninth aspect, a computer-readable storage medium is provided. The computer-readable storage medium stores computer instructions. When the computer instructions are run on a computer, the computer is enabled to perform the communication method according to any design in any one of the foregoing aspects.

According to a tenth aspect, a computer program product is provided. The computer program product includes a computer program or instructions. When the computer program or the instructions are run on a computer, the computer is enabled to perform the communication method according to any design in any one of the foregoing aspects.

### BRIEF DESCRIPTION OF DRAWINGS

FIG. 1 is an example diagram of an architecture of a communication system according to an embodiment of this application;
FIG. 2 is a diagram of an architecture of a 5G radio access network according to an embodiment of this application;
FIG. 3 is a diagram of function split of an access network device according to an embodiment of this application;
FIG. 4 is a diagram of a communication scenario according to an embodiment of this application;
FIG. 5 is a diagram of a communication scenario according to an embodiment of this application;
FIG. 6 is a diagram of a communication method according to an embodiment of this application;
FIG. 7 is a diagram of a candidate function split manner according to an embodiment of this application;
FIG. 8 is a diagram of another candidate function split manner according to an embodiment of this application;
FIG. 9 is a diagram of still another candidate function split manner according to an embodiment of this application;
FIG. 10 is a diagram of a network structure of a first function entity according to an embodiment of this application;
FIG. 11 is a diagram of a connection between a first function entity and a second function entity according to an embodiment of this application;
FIG. 12 is a diagram of a network structure of another first function entity according to an embodiment of this application;
FIG. 13 is a diagram of a network structure of still another first function entity according to an embodiment of this application;
FIG. 14 is a diagram of another communication method according to an embodiment of this application;
FIG. 15 is a diagram of a network structure of yet another first function entity according to an embodiment of this application;
FIG. 16 is a diagram of still another communication method according to an embodiment of this application;
FIG. 17 is a diagram of a communication apparatus according to an embodiment of this application; and
FIG. 18 is a diagram of another communication apparatus according to an embodiment of this application.

### DESCRIPTION OF EMBODIMENTS

A network architecture and a service scenario described in embodiments of this application are intended to describe the technical solutions in embodiments of this application more clearly, and do not constitute a limitation on the technical solutions provided in embodiments of this application. A person of ordinary skill in the art may know that with the evolution of the network architecture and the emergence of new service scenarios, the technical solutions provided in embodiments of this application are also applicable to similar technical problems.

In the specification and accompanying drawings of embodiments of this application, terms such as "first" and "second" are intended to distinguish between different objects or distinguish between different processing on a same object. Terms such as "first" and "second" may distinguish between same items or similar items with basically same functions and purposes. For example, a first device and a second device are merely intended to distinguish between different devices, and do not limit a sequence thereof. A person skilled in the art may understand that the terms such as "first" and "second" do not limit a quantity or an execution sequence, and the terms such as "first" and "second" do not indicate a definite difference.

"At least one" means one or more, and "a plurality of" means two or more.

In descriptions of embodiments of this application, unless otherwise stated, "/" means an "or" relationship between associated objects, for example, A/B may represent A or B. In embodiments of this application, "and/or" describes only an association relationship between associated objects, and indicates that three relationships may exist. For example, A and/or B may represent three cases: Only A exists, both A and B exist, and only B exists, where A and B may be singular or plural.

In the descriptions of embodiments of this application, "a plurality of" means two or more unless otherwise specified. "At least one of the following items (pieces)" or a similar expression thereof refers to any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In addition, terms "include", "have", and any other variants thereof mentioned in descriptions of embodiments of this application are intended to cover a non-exclusive inclusion. For example, a process, a method, a system, a product, or a device that includes a series of steps or units is not limited to the listed steps or units, but optionally further includes another unlisted step or unit, or optionally further includes another inherent step or unit of the process, the method, the product, or the device.

In embodiments of this application, the word such as "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

It may be understood that an "embodiment" mentioned throughout this specification means that particular features, structures, or characteristics related to this embodiment are included in at least one embodiment in embodiments of this application. Therefore, embodiments in the entire specification are not necessarily a same embodiment. In addition, these particular features, structures, or characteristics may be combined in one or more embodiments by using any appropriate manner. It may be understood that sequence numbers of the foregoing processes do not mean execution sequences in embodiments of this application. The execution sequences of the processes should be determined based on functions and internal logic of the processes, and should not constitute any limitation on the implementation processes of embodiments of this application.

It may be understood that, in embodiments of this application, both "when" and "if" mean that corresponding processing is performed in an objective situation, are not intended to limit time, do not require a determining action during implementation, and do not mean any other limitation.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, the apparatus provided in embodiments of this application may also correspondingly implement these features or functions. Details are not described herein.

In embodiments of this application, unless otherwise specified, for same or similar parts of embodiments, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The following implementations of embodiments of this application are not intended to limit the protection scope of embodiments of this application.

Collection, storage, use, processing, transmission, provision, disclosure, and the like of personal user information in the technical solutions of embodiments of this application all comply with related laws and regulations, and do not violate public order and good morals. For example, in the technical solutions in embodiments of this application, the personal user information is processed with user authorization. This applies throughout and will not be repeated below.

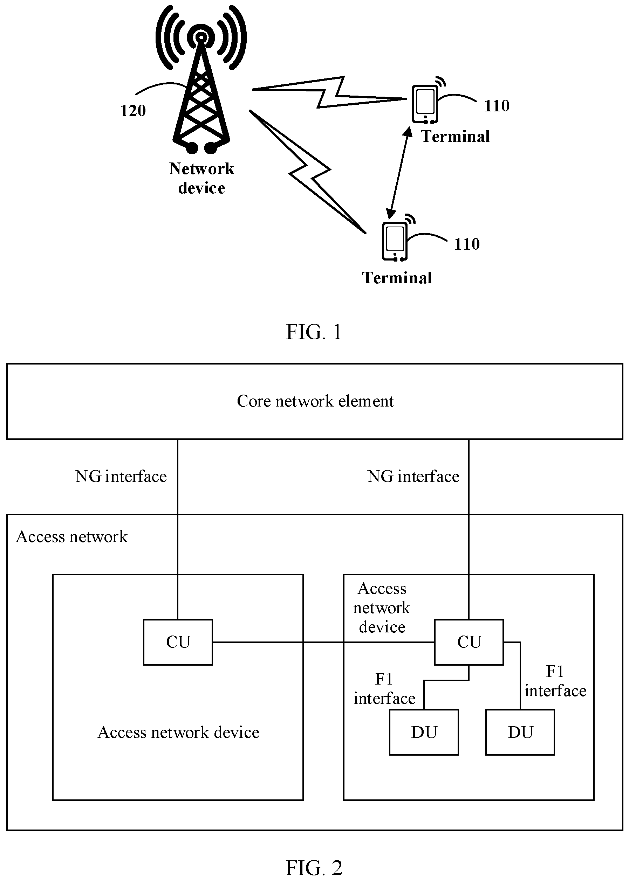

FIG. 1 is an example diagram of an architecture of a communication system according to an embodiment of this application.

As shown in FIG. 1, the communication system in this embodiment of this application may include at least one terminal 110 and a network device 120.

The terminal 110 and the network device 120 communicate with each other in a wireless manner. The network device 120 may be a radio access network device. A wired or wireless manner may be used for a connection between terminals and a connection between radio access network devices. FIG. 1 is merely a diagram. The communication system may further include another network device. For example, the communication system may further include a wireless relay device, a wireless backhaul device, and a core network device, which are not shown in FIG. 1. A connection relationship between devices is not limited to the foregoing enumerated manners.

The radio access network device may be a base station (base station), an evolved NodeB (evolved NodeB, eNodeB), a transmission reception point (transmission reception point, TRP), a next generation NodeB (next generation NodeB, gNodeB/gNB) in a 5G mobile communication system, a next generation base station in a future mobile communication system, an access node in a Wi-Fi system, or the like; or may be a module or a unit that completes some functions of a base station, for example, may be a central unit (central unit, CU) or a distributed unit (distributed unit, DU). The radio access network device may be a macro base station, may be a micro base station or an indoor base station, or may be a relay node, a donor node, or the like. In some other embodiments, alternatively, the radio access network device may be an access network device in an open radio access network (open radio access network, O-RAN). In the O-RAN, a CU may be referred to as an open CU (open CU, O-CU), a DU may be referred to as an open DU (open DU, O-DU), and an RU may be referred to as an open RU (open RU, O-RU). A specific technology and a specific device form that are used by the radio access network device are not limited in embodiments of this application. The radio access network device is sometimes also referred to as a network device briefly. For ease of description, descriptions are provided below by using an example in which the radio access network device is a base station.

The terminal may also be referred to as a terminal device, user equipment (user equipment, UE), a mobile station, a mobile terminal, or the like. The terminal device may be widely used in various scenarios, for example, device-to-device (device-to-device, D2D), vehicle-to-everything (vehicle-to-everything, V2X) communication, machine-type communication (machine-type communication, MTC), an internet of things (internet of things, IoT), virtual reality, augmented reality, industrial control, autonomous driving, telemedicine, a smart grid, smart furniture, smart office, smart wearable, smart transportation, and a smart city. The terminal device may be a mobile phone, a tablet computer, a computer with a wireless transceiver function, a wearable device, a vehicle, an uncrewed aerial vehicle, a helicopter, an airplane, a ship, a robot, a mechanical arm, a smart home device, or the like. A specific technology and a specific device form that are used by the terminal device are not limited in embodiments of this application.

The base station and the terminal may be fixed or movable. The base station and the terminal device may be deployed on land, including indoor, outdoor, handheld, or vehicle-mounted forms; or may be deployed on water; or may be deployed on airplanes, balloons, and artificial satellites in the air. Application scenarios of the base station and the terminal device are not limited in embodiments of this application.

Communication between the base station and the terminal, between the base stations, or between the terminals may be performed over a licensed spectrum, or may be performed over an unlicensed spectrum, or may be performed over both the licensed spectrum and the unlicensed spectrum. Communication may be performed over a spectrum below 6 gigahertz (gigahertz, GHz), or may be performed over a spectrum above 6 GHz, or may be performed over both the spectrum below 6 GHz and the spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in an application scenario of the foregoing terminal device, for example, a smart grid, industrial control, smart transportation, and a smart city. A function of a relay may also be performed by a module (for example, a chip or a modem) in the relay, or may be performed by an apparatus including the function of the relay. A function of the terminal may be performed by a module (for example, a chip or a modem) in the terminal, or may be performed by an apparatus including the function of the terminal.

A wireless communication system includes communication devices, and the communication devices may perform wireless communication through an air interface resource. The communication devices may include a network device and a terminal device, and the network device may also be referred to as a base station device. The air interface resource may include at least one of a time domain resource, a frequency domain resource, a code resource, and a spatial resource. The communication device may also be referred to as a communication apparatus.

The solutions provided in embodiments of this application may be applied to wireless communication between communication devices. The wireless communication may include wireless communication between a network device and a terminal, wireless communication between network devices, and wireless communication between terminals. In embodiments of this application, the term "wireless communication" may also be briefly referred to as "communication", and the term "communication" may also be described as "data transmission", "information transmission", or "transmission".

Embodiments of this application may be applied to possible communication links such as an uplink (uplink, UL), a downlink (downlink, DL), an access link, a backhaul (backhaul) link, and a sidelink (sidelink, SL). This is not limited in embodiments of this application. From the perspective of service scenarios, embodiments of this application are applicable to a plurality of scenarios, for example, an extended reality (extended reality, XR) service, an artificial intelligence (artificial intelligence, AI) service, and a large-capacity scenario. This is not limited in embodiments of this application. The SL may also be referred to as a sidelink, a side link, or the like. This is not limited in embodiments of this application.

A 4G base station may be divided into two parts: a BBU and an RRU. The BBU is connected to one or more RRUs through an optical fiber, metal cabling, or a microwave link. The BBU mainly performs centralized higher-layer processing on baseband signals. The RRU mainly receives and sends a baseband signal, and performs functions such as modulation and demodulation of a radio frequency signal, data processing, and power amplification. When the RRU is closer to an antenna, a feeder loss is smaller. In some cases, the RRU may also be referred to as a radio unit (radio unit, RU). In this case, the BBU can process baseband signals in a highly centralized manner. Therefore, compute resources can be deployed in a centralized manner, so that resource utilization is high and deployment costs are low. However, such lower-layer split has a high requirement on bandwidth of the fronthaul (fronthaul) link between the BBU and the RRU, and optical fiber deployment costs are high.

Therefore, to reduce pressure on the bandwidth of the fronthaul link and the deployment costs caused by the lower-layer split manner, in a 3rd generation partnership project (3rd generation partnership project, 3GPP) 5G radio access network, considering that a base station is split into two function entities such as a CU and a DU at a higher layer, a midhaul (midhaul) link between the CU and the DU has a lower requirement on network bandwidth. Therefore, the CU and the DU may be split. A 5G radio access network may also be referred to as a next generation radio access network (next generation radio access network, NG-RAN).

FIG. 2 shows an architecture of a 5G radio access network. For example, the access network device may be a gNB, and the gNB may include two parts: a CU and a DU. Certainly, there may be one or more DUs. This is not limited in embodiments of this application. The gNB may communicate with a 5G core network (5G core network, 5GC) core network element through a next generation (next generation, NG) interface, and different gNBs may communicate with each other through an Xn interface, for example, through an Xn-control (control, C) interface. The CU may communicate with different DUs through F1 interfaces.

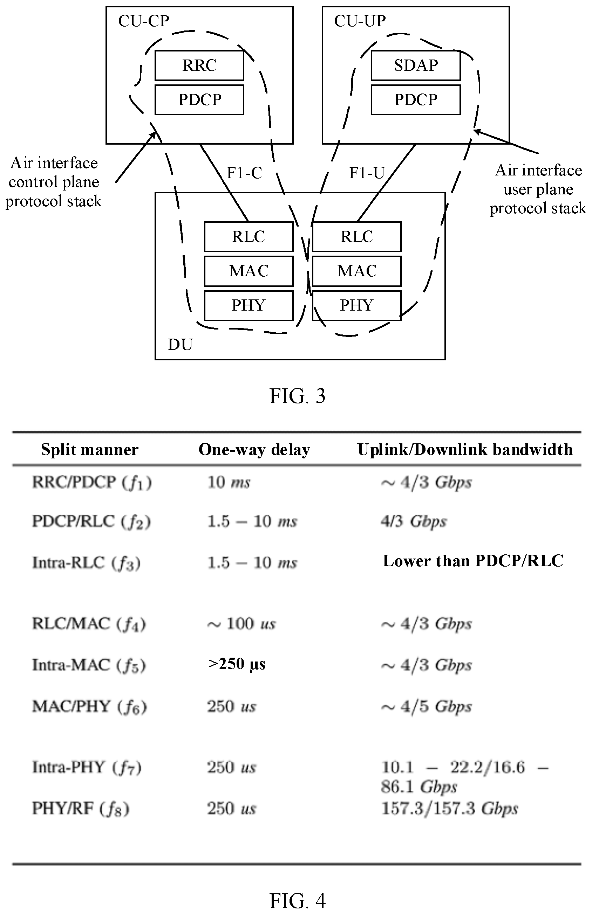

In some examples, function split between the CU and the DU in the 5G access network device is performed in a static split manner, and fixed split is performed at a protocol stack function granularity. As shown in FIG. 3, protocol stacks such as radio link control (radio link control, RLC), media access control (media access control, MAC), and physical layer (physical layer, PHY) may be located in the DU of the access network device. MAC may also be referred to as media access control, medium access control, or the like. This is not limited in embodiments of this application. Protocol stacks such as radio resource control (radio resource control, RRC), service data adaptation protocol (service data adaptation protocol, SDAP), and packet data convergence protocol (packet data convergence protocol, PDCP) may be located in the CU of the access network device. The RRC implements air interface radio resource and air interface connection control, and belongs to a control plane (control plane, CP) protocol. The SDAP performs mapping between a quality of service flow (quality of service flow, QoS-flow) and a data radio bearer (data radio bearer, DRB), and belongs to a user plane (user plane, UP) protocol. The QoS-flow represents a service data flow having a specific quality of service (quality of service, QoS) requirement.

It can be learned from FIG. 3 that, for the DU, both a control plane protocol stack and a user plane protocol stack relate to RLC, MAC, and PHY. For the CU, PDCP is applicable to the control plane protocol stack and the user plane protocol stack, the RRC corresponds to only the control plane protocol stack, and the SDAP corresponds to only the user plane protocol stack. If a function of the control plane protocol stack is performed, the CU communicates with the DU through an F1-C interface. If a function of the user plane protocol stack is performed, the CU communicates with the DU through an F1-user (user) U interface. On the basis of CU-DU separation, the CU of the access network device may be separated into a CP unit and a UP unit. The CP of the CU of the access network device may be denoted as a gNB-CU-CP, and the UP of the CU of the access network device may be denoted as a gNB-CU-UP. A PDCP layer protocol exists in each of the gNB-CU-CP unit and the gNB-CU-UP unit, an RRC layer is located above the PDCP layer in the gNB-CU-CP unit, and an SDAP layer is located above the PDCP layer in the gNB-CU-UP unit.

The RLC layer may provide transparent data transmission and data transmission in an unacknowledged mode and an acknowledged mode. The MAC layer is mainly responsible for controlling and connecting a physical medium at the physical layer. The PHY layer is responsible for transmitting bits or bit groups on a physical medium, including encoding sent information and decoding received information. For a specific protocol, refer to a related technology, for example, 3GPP technical specification (technical specification, TS) 38.300. Details are not described herein in embodiments of this application.

Currently, in a network deployment phase, fixed RAN function split may be set based on prior statistical information, such as a network peak rate and an average data rate requirement, to deploy the CU and the DU. It is clear that, the foregoing function split of the access network device that is merely fixed or static cannot adapt to a real-time change of service traffic. Certainly, FIG. 3 shows only one possible function split manner. Other fixed split manners may cause insufficient compute resource utilization and bandwidth resource utilization. As shown in FIG. 4, for example, when a channel bandwidth is 100 megahertz (Megahertz, MHz), a modulation scheme is 256 quadrature amplitude modulation (quadrature amplitude modulation, QAM), and an uplink and a downlink use multiple-input multiple-output (multiple-input multiple-output, MIMO), different function split manners have requirements for transmission bandwidths and transmission delays of the uplink and the downlink. The MIMO condition may be, for example, 8 MIMO layers. It can be learned from FIG. 4 that, when a split manner is closer to lower-layer split, a requirement for link bandwidth capacity is higher, and corresponding optical fiber deployment costs are also higher. When a split manner is closer to higher-layer split, processing functions involved in lower-layer function entities are more scattered, energy consumption is higher, and total deployment costs of compute resources are also higher. Certainly, any fixed split manner may cause insufficient compute resource utilization and bandwidth utilization for a real-time change of a traffic service. In other words, different services have different QoS capability requirements, such as a network delay, a rate, and reliability. A static split manner cannot dynamically adapt to diversified service QoS requirements.

Therefore, this application provides a communication method. One or more target policies are determined, so that different function entities can flexibly adjust, based on different target policies, communication functions corresponding to the different function entities, to adapt to quality of service requirements of a plurality of types of different service traffic.

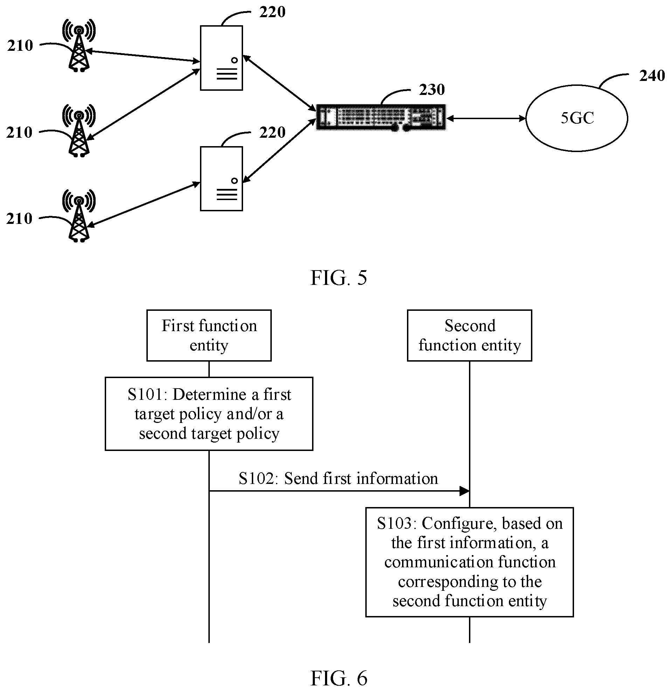

FIG. 5 is a diagram of a communication scenario according to an embodiment of this application.

As shown in FIG. 5, an access network device may be further divided into a plurality of function entities such as an RU 210, a DU 220, and a CU 230. Certainly, the access network device may include one or more RUs 210, one or more DUs 220, and one or more CUs 230. The CU 230 is connected to a 5GC 240 to implement communication with a core network device. In embodiments of this application, the core network device may also be referred to as a core network element.

The 5GC 240 may be connected to a plurality of CUs 230, one CU 230 may be connected to a plurality of DUs 220, and one DU 220 may be connected to a plurality of RUs 210.

In some examples, the access network device may be a gNB. Protocol function entities of the access network device may include the CU 230 and the DU 220. The access network device provides a new radio (new radio, NR) user plane and control plane protocol endpoint for a terminal, and communicates with the 5GC 240 through an NG interface. NR is a 5G radio access technology. The access network device is configured to provide a wireless network connection function between the terminal and a core network.

In some examples, the CU 230 may host RRC, SDAP, and PDCP protocols of the access network device and control operations of one or more DUs. The CU 230 communicates with the DU 220 through an F1 interface.

In some examples, the DU 220 may host RLC, MAC, and PHY layers of the access network device, and its operation is controlled by the CU 230. One DU 220 may support one or more cells, and one cell supports one DU 220.

In some examples, the 5GC 240 may include any possible core network element such as an access and mobility management function (access and mobility management function, AMF) entity, a session association function (session management function, SMF) entity, a user plane function (user plane function, UPF) entity, and a unified data management (unified data management, UDM) entity.

In some examples, the RU 210, the DU 220, and the CU 230 may be deployed on a same physical device, or may be separately deployed on different physical devices. Alternatively, in the RU 210, the DU 220, and the CU 230, some function entities are deployed on a same physical device, and some function entities are deployed on different physical devices. This is not limited in embodiments of this application.

In some embodiments, the access network device may be further split into two function entities. For example, the CU 230 and the DU 220 are deployed on a same physical device, and the CU 230 and the DU 220 may be considered as one function entity. Alternatively, the DU 220 and the RU 210 are deployed on a same physical device, and the DU 220 and the RU 210 may be considered as one function entity.

Certainly, this application is not limited to the 5G network architecture. Embodiments of this application are also applicable to a long term evolution (long term evolution, LTE) network and a future possible network architecture like a future mobile communication system. It should be understood that embodiments of this application are applicable to any network architecture having a communication connection capability.

FIG. 6 is a flowchart of a communication method according to an embodiment of this application.

As shown in FIG. 6, a communication process may be applied to but is not limited to the communication scenarios shown in FIG. 1 and FIG. 5. The method may include the following steps.

S101: A first function entity determines a first target policy and/or a second target policy.

In some embodiments, the first function entity may determine the first target policy, where the first target policy indicates a communication function split manner of a first target entity and a second target entity.

In some other embodiments, the first function entity may determine the second target policy, where the second target policy indicates a communication function split manner of the second target entity and a third target entity.

In some other embodiments, the first function entity may determine the first target policy and the second target policy, where target policies may include the first target policy and the second target policy mentioned above.

In some examples, the first function entity may be considered as a function entity that determines one or more target policies, that is, a function entity configured to flexibly split communication functions between different target entities. For example, the first function entity may be referred to as a radio access network split control function (radio access network split control function, RSCF). Certainly, a name of the first function entity is not limited in embodiments of this application.

In some examples, the first target entity, the second target entity, and the third target entity may be collectively referred to as a second function entity. The second function entity may include at least one of the first target entity, the second target entity, and the third target entity.

In some embodiments, the first target entity, the second target entity, and the third target entity are function entities in a radio access network (radio access network, RAN), a core network, and/or a network management domain. It may also be considered as that the second function entity is a function entity in the RAN, the core network, and/or the network management domain.

For example, the second function entity is a CU. Alternatively, the second function entity is a function entity having CU and AMF functions. Alternatively, the second function entity is a function entity having CU and UPF functions. Alternatively, the second function entity is a function entity having CU and operation, administration, and maintenance (operation, administration, and maintenance, OAM) functions. OAM may be considered as a function belonging to the network management domain. It may be understood that the foregoing descriptions are merely some examples. This is not limited in embodiments of this application.

In embodiments of this application, a plurality of communication functions such as the radio access network, the core network, and the network management domain may be dynamically split, thereby improving universality.

In some embodiments, when the first target entity, the second target entity, and the third target entity are function entities in the RAN, the function entity in the RAN may include at least one of a CU, a DU, and an RU.

For example, if the first function entity determines the first target policy and the second target policy, the first target entity may be a CU, the second target entity may be a DU, and the third target entity may be an RU; or the first target entity may be an RU, the second target entity may be a DU, and the third target entity may be a CU.

For another example, if the first function entity determines the first target policy or the second target policy, the first target entity, the second target entity, and the third target entity may be any function entities mentioned above. The first target entity and the second target entity are used as an example. The first target entity may be a CU, and the second target entity may be a DU. Alternatively, the first target entity may be a DU, and the second target entity may be an RU. Alternatively, the first target entity may be a function entity having CU and DU functions, and the second target entity may be an RU. Alternatively, the first target entity may be a CU, and the second target entity may be a function entity having DU and RU functions. Similarly, division into the second target entity and the third target entity is similar to division into the first target entity and the second target entity. Details are not described herein again in embodiments of this application.

In embodiments of this application, flexible adjustment of communication functions of a plurality of function entities such as the CU, the DU, and the RU in the RAN is implemented, to adapt to quality of service requirements of different services, improve bandwidth utilization and compute resource utilization, and reduce deployment costs of different function entities in the RAN.

In the following description, embodiments of this application provide cases of determining a first target policy and/or a second target policy at different granularities.

### Case A:

In some embodiments, the first function entity may determine, for different terminals, a first target policy and/or a second target policy corresponding to any terminal. In other words, the first function entity may determine, for each (per) possible terminal at a granularity of the terminal, a first target policy and/or a second target policy corresponding to the terminal.

For example, for a terminal 1, a first target policy and/or a second target policy corresponding to the terminal 1 are/is determined; and for a terminal 2, a first target policy and/or a second target policy corresponding to the terminal 2 are/is determined.

### Case B:

In some embodiments, the first function entity may determine, for different protocol data unit (protocol data unit, PDU) sessions, a first target policy and/or a second target policy corresponding to any PDU session. In other words, the first function entity may determine, for each possible PDU session at a granularity of the PDU session, a first target policy and/or a second target policy corresponding to the PDU session.

For example, for a PDU session 1, a first target policy and/or a second target policy corresponding to the PDU session 1 are/is determined; and for a PDU session 2, a first target policy and/or a second target policy corresponding to the PDU session 2 are/is determined.

### Case C:

In some embodiments, the first function entity may determine, for different QoS flows, a first target policy and/or a second target policy corresponding to any QoS flow. In other words, the first function entity may determine, for each possible QoS flow at a granularity of the QoS flow, a first target policy and/or a second target policy corresponding to the QoS flow.

For example, for a QoS flow 1, a first target policy and/or a second target policy corresponding to the QoS flow 1 are/is determined; and for a QoS flow 2, a first target policy and/or a second target policy corresponding to the QoS flow 2 are/is determined.

### Case D:

In some embodiments, the first function entity may determine, for different DRBs, a first target policy and/or a second target policy corresponding to any DRB. In other words, the first function entity may determine, for each possible DRB at a granularity of the DRB, a first target policy and/or a second target policy corresponding to the DRB.

For example, for a DRB 1, a first target policy and/or a second target policy corresponding to the DRB 1 are/is determined; and for a DRB 2, a first target policy and/or a second target policy corresponding to the DRB 2 are/is determined.

### Case E:

In some embodiments, the first function entity may determine, for different data packets (packet), a first target policy and/or a second target policy corresponding to any data packet. In other words, the first function entity may determine, for each possible data packet at a granularity of the data packet, a first target policy and/or a second target policy corresponding to the data packet.

For example, for a data packet 1, a first target policy and/or a second target policy corresponding to the data packet 1 are/is determined; and for a data packet 2, a first target policy and/or a second target policy corresponding to the data packet 2 are/is determined.

### Case F:

In some embodiments, the first function entity may determine, for different RUs, a target policy corresponding to any RU. When the target policy is the first target policy, the first target entity may be a DU, and the second target entity may be an RU; or the first target entity may be an RU, and the second target entity may be a DU. When the target policy is the second target policy, the second target entity may be a DU, and the third target entity may be an RU.

In this case, considering that one DU may be connected to one or more different RUs, the first function entity may determine, for each possible RU at a granularity of the RU, a first target policy corresponding to the RU.

For example, one DU is connected to two RUs, including an RU 1 and an RU 2. For the RU 1, a target policy corresponding to the RU 1 is determined; and for the RU 2, a target policy corresponding to the RU 2 is determined.

### Case G:

In some embodiments, the first function entity may determine, for different cells (cell), a first target policy and/or a second target policy corresponding to any cell. Considering that the DU may correspond to one or more different cells, the first function entity may determine, for each possible cell based on a granularity of the cell, a first target policy and/or a second target policy corresponding to the cell.

For example, for the cell 1, a first target policy and/or a second target policy corresponding to the cell 1 are/is determined; and for the cell 2, a first target policy and/or a second target policy corresponding to the cell 2 are/is determined.

In embodiments of this application, target policies at different granularities may be determined, so that a communication function can be flexibly adjusted at a corresponding granularity.

S102: The first function entity sends first information to the second function entity.

In some embodiments, the first function entity may send the first information to the second function entity, where the first information indicates the first target policy and/or the second target policy determined in S101.

For example, the first function entity sends the first information to the first target entity. For another example, the first function entity sends the first information to the second target entity. For another example, the first function entity sends the first information to the third target entity.

In some other embodiments, the second function entity may receive the first information sent by the first function entity.

For example, the first target entity receives the first information sent by the first function entity. For another example, the second target entity receives the first information sent by the first function entity. For another example, the third target entity receives the first information sent by the first function entity.

S103: The second function entity configures, based on the first information, a communication function corresponding to the second function entity.

In some embodiments, the second function entity may configure, based on the first information received in S102, the communication function corresponding to the second function entity.

For example, the first target entity determines the first target policy based on the received first information. The first target entity configures, based on the first target policy, a communication function corresponding to the first target entity. Similarly, descriptions of the second target entity and the third target entity are similar to descriptions of the first target entity. Details are not described herein again in embodiments of this application.

Certainly, the second target entity may relate to both the first target policy and the second target policy. In this case, a function configured by one target policy for the second target entity is usually a subset of a function configured by the other target policy for the second target entity. For example, the first target entity is a CU, the second target entity is a DU, and the third target entity is an RU. A function configured by the first target policy for the DU actually includes functions configured by the second target policy for the DU and the RU, and the function configured by the second target policy for the DU is a part of the function configured by the first target policy for the DU. Therefore, the DU actually configures a corresponding communication function for the DU based on the second target policy.

In embodiments of this application, one or more target policies are determined, to flexibly split communication functions corresponding to different function entities. Corresponding function entities may flexibly adjust, based on different target policies, communication functions corresponding to the function entities, to adapt to quality of service requirements of different services, improve bandwidth utilization and compute resource utilization, and reduce deployment costs.

In the communication method provided in embodiments of this application, to reduce calculation complexity of dynamically configuring a target policy, the first function entity may further determine a first target function split manner from at least one candidate function split manner, and/or determine a second target function split manner from at least one candidate function split manner, where the first target function split manner has an association relationship with the first target policy, and the second target function split manner has an association relationship with the second target policy; the candidate function split manner is a communication function split manner of two communicatively connected second function entities of different types.

In some embodiments, the first function entity may further determine a first target function split manner from at least one candidate function split manner. The first function entity obtains the first target policy based on the first target function split manner. The candidate function split manner may be represented as a communication function split manner of two communicatively connected second function entities of different types.

For example, the candidate function split manner may include a communication function split manner corresponding to a CU and a DU, or may include a communication function split manner corresponding to a DU and an RU. However, it should be understood that types of the two second function entities corresponding to the candidate function split manner are different. For example, a candidate function split manner corresponds to splitting communication functions of the CU and the DU. The CU and the DU are second function entities of different types. In other words, this embodiment of this application does not involve splitting communication functions of two same second function entities. For example, this embodiment of this application does not involve splitting communication functions of two CUs, or splitting communication functions of two DUs.

It should be understood that the function split manner in embodiments of this application indicates how communication functions corresponding to different function entities are split. The target policy may include a function split manner corresponding to the policy, and/or a communication function corresponding to each function entity in the function split manner.

In embodiments of this application, the communication function split manner may be a manner of splitting a communication function corresponding to a protocol layer. In other words, the candidate function split manner, the first target function split manner, and the second target function split manner may be manners of splitting the communication function corresponding to the protocol layer.

In embodiments of this application, the communication function corresponding to the protocol layer may be flexibly split, so that different function entities configure communication functions corresponding to different protocol layers, to adapt to quality of service requirements of different services.

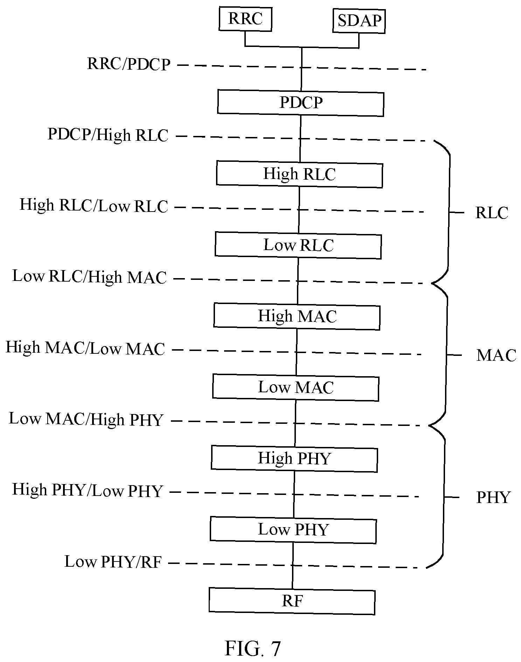

In some examples, FIG. 7 shows a plurality of possible candidate function split manners. Communication functions may be split at a protocol layer granularity. For example, a plurality of possible candidate function split manners such as Option (option) 1 to Option 8 are provided. Option 1 may be communication function split between RRC and PDCP shown in FIG. 7, or Option 1 may be communication function split between SDAP and PDCP shown in FIG. 7. It may be understood that, in the following embodiments of this application, control plane RRC is used as an example for description. For division of a user plane, RRC may be replaced with SDAP. Details are not described in embodiments of this application.

Option 2 may be communication function split between PDCP and high RLC shown in FIG. 7. Option 3 may be communication function split between high RLC and low RLC shown in FIG. 7. Therefore, Option 3 may also be considered as intra RLC communication function split. Option 4 may be communication function split between low RLC and high MAC shown in FIG. 7. Option 5 may be communication function split between high MAC and low MAC shown in FIG. 7. Therefore, Option 5 may also be considered as intra MAC communication function split. Option 6 may be communication function split between low MAC and high PHY shown in FIG. 7. Option 7 may be communication function split between high PHY and low PHY shown in FIG. 7. Therefore, Option 7 may also be considered as intra PHY communication function split. Option 8 may be communication function split between low PHY and radio frequency (radio frequency, RF) shown in FIG. 7.

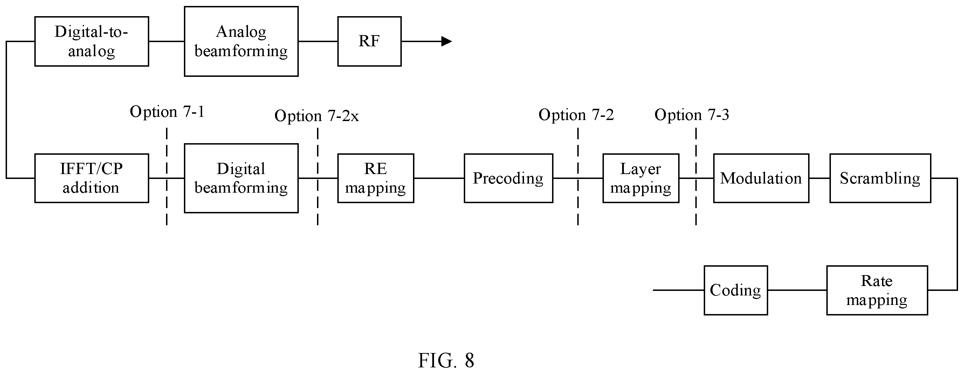

In some other examples, for intra (intra) communication function split of some protocol layers, such as RLC, MAC, and PHY, the protocol layer may be divided into a higher layer and a lower layer. The following uses PHY as an example to describe intra communication function split of a protocol layer. A split manner of another protocol layer is similar to that of PHY. A difference lies in that intra protocol layer communication functions are different. For details, refer to a communication function configured in a corresponding protocol layer. This is not limited in embodiments of this application. Refer to FIG. 8. Intra PHY communication function split is performed in downlink communication. It is assumed that intra PHY may be further split into functions such as coding (coding), rate mapping (rate mapping), scrambling (scrambling), modulation (modulation), layer (layer) mapping (mapper), precoding (precoding), resource element (resource element, RE) mapping, digital beamforming (digital beamforming, DBF), inverse fast Fourier transform (inverse fast Fourier transform, IFFT)/cyclic prefix (cyclic prefix, CP) addition (addition), digital-to-analog (digital-to-analog), and analog beamforming (analog beamforming). The RE may be a unit radio resource including one subcarrier and one symbol (symbol). In this case, the split manner of Option 7 may further include manners such as Option 7-1, Option 7-2, Option 7-2x, and Option 7-3.

For example, Option 7-1 may be communication function split between IFFT/CP addition and DBF shown in FIG. 8; Option 7-2 may be communication function split between precoding and layer mapping shown in FIG. 8; Option 7-2x may be communication function split between DBF and RE mapping shown in FIG. 8; and Option 7-3 may be communication function split between layer mapping and modulation shown in FIG. 8.

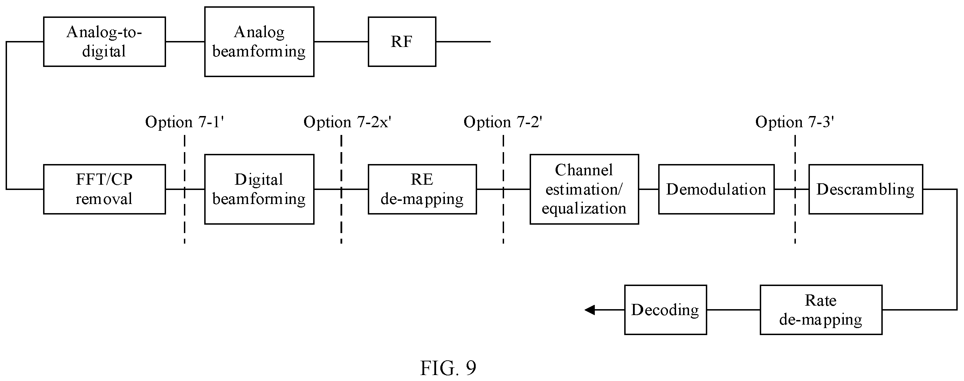

Refer to FIG. 9. Intra PHY communication function split is performed in uplink communication. It is assumed that intra PHY may be further split into functions such as decoding (decoding), rate de-mapping (rate de-mapping), descrambling (descrambling), demodulation (demodulation), channel estimation (channel estimation)/equalization (equalization), RE de-mapping (de-mapping), DBF, fast Fourier transform (fast Fourier transform, FFT)/CP removal (removal), analog-to-digital (analog-to-digital), and analog beamforming. In this case, the split manner of Option 7 may further include manners such as Option 7-1', Option 7-2', Option 7-2x', and Option 7-3'. Demodulation may also be referred to as de-modulation.

For example, Option 7-1' may be function split between FFT/CP removal and DBF shown in FIG. 9; Option 7-2' may be communication function split between RE de-mapping and channel estimation/equalization shown in FIG. 9; Option 7-2x' may be communication function split between DBF and RE de-mapping shown in FIG. 9; and Option 7-3' may be communication function split between demodulation and descrambling shown in FIG. 9.

Certainly, for intra MAC and intra RLC split manners, refer to the intra PHY split manner. A specific communication function of each intra protocol layer and specific functions to be combined together through split may be determined based on an actual situation. This is not limited in embodiments of this application.

It may be understood that any one of the plurality of options shown in FIG. 7 to FIG. 9 may be considered as a candidate function split manner. One or more of the foregoing options form one or more candidate function split manners. The first function entity may select one option from the one or more candidate function split manners as the first target function split manner.

Similarly, a process in which the first function entity determines the second target function split manner is similar to the process in which the first function entity determines the first target function split manner. Details are not described herein again in embodiments of this application.

It should be noted that FIG. 7 to FIG. 9 show only a limited quantity of candidate function split manners. In other examples, any other more or fewer possible split manners may be included. This is not limited in embodiments of this application.

It may be understood that, if the first function entity determines the first target policy and/or the second target policy at different granularities, assuming that the granularity is a PDU session, the first target entity is a CU, and the second target entity is a DU. For a PDU session 1, it may be determined that the first target policy corresponds to Option 2; and for a PDU session 2, it may be determined that the first target policy corresponds to Option 5. Certainly, the foregoing description is merely an example. This is not limited in embodiments of this application.

In some examples, a communication function related to the candidate function split manner may further include a core network function, a network management domain function, and the like, for example, may further include a mobility management function, a user plane function, an identity management function, and the like of a core network. This is not limited in embodiments of this application.

In embodiments of this application, a plurality of candidate function split manners are provided in advance, and a split manner corresponding to the target policy is selected from the plurality of candidate function split manners. This reduces calculation complexity of dynamically configuring the target policy, and can also avoid improper split of the communication function.

Based on the plurality of candidate function split manners provided in FIG. 7 to FIG. 9, embodiments of this application also provide a plurality of first target policies and a plurality of second target policies, indicating a plurality of split cases of communication functions of different function entities.

### Case 1:

In some embodiments, the first target policy indicates that a communication function of the first target entity includes RRC. The second target policy indicates that a communication function of the second target entity includes PDCP, RLC, MAC, and high physical layer (high physical layer, HIGH PHY). The second target policy indicates that a communication function of the third target entity includes low physical layer (low physical layer, LOW PHY).

In some examples, in this case, the first target policy indicating the communication function of the first target entity may include the second target policy indicating a sum of the communication functions of the second target entity and the third target entity, for example, PDCP, RLC, MAC, HIGH PHY, and LOW PHY.

### Case 2:

In some embodiments, the first target policy indicates that a communication function of the first target entity includes RRC and PDCP. The second target policy indicates that a communication function of the second target entity includes RLC, MAC, and HIGH PHY. The second target policy indicates that a communication function of the third target entity includes LOW PHY.

In some examples, in this case, the first target policy indicating the communication function of the first target entity may include the second target policy indicating a sum of the communication functions of the second target entity and the third target entity, for example, RLC, MAC, HIGH PHY, and LOW PHY.

### Case 3:

In some embodiments, the first target policy indicates that a communication function of the first target entity includes RRC, PDCP, and RLC. The second target policy indicates that a communication function of the second target entity includes MAC and HIGH PHY. The second target policy indicates that a communication function of the third target entity includes LOW PHY.

In some examples, in this case, the first target policy indicating the communication function of the first target entity may include the second target policy indicating a sum of the communication functions of the second target entity and the third target entity, for example, MAC, HIGH PHY, and LOW PHY.

### Case 4:

In some embodiments, the first target policy indicates that a communication function of the first target entity includes RRC, PDCP, RLC, and MAC. The second target policy indicates that a communication function of the second target entity includes HIGH PHY. The second target policy indicates that a communication function of the third target entity includes LOW PHY.

In some examples, in this case, the first target policy indicating the communication function of the first target entity may include the second target policy indicating a sum of the communication functions of the second target entity and the third target entity, for example, HIGH PHY and LOW PHY.

### Case 5:

In some embodiments, the first target policy indicates that a communication function of the first target entity includes RRC, PDCP, RLC, MAC, and HIGH PHY. The first target policy indicates that a communication function of the second target entity includes LOW PHY. It may be understood that, in this case, the first function entity may determine only the first target policy.

For any one of Case 1 to Case 5, for HIGH PHY and LOW PHY, refer to the intra PHY split manners shown in FIG. 8 and FIG. 9. A part that is closer to a MAC layer after the intra PHY function split may be considered as HIGH PHY, and a part that is closer to an RF layer after the intra PHY function split may be considered as LOW PHY.

Embodiments of this application provide a plurality of split manners of communication functions corresponding to function entities, which may be applied to QoS requirements of different services.

In some possible implementations, when the first function entity determines the first target policy and/or the second target policy based on the at least one candidate function split manner, to reduce resource overheads in a communication process in which the first function entity indicates the first target policy and/or the second target policy to the second function entity, the method may further include: sending the at least one candidate function split manner; and/or sending fifth information, where the fifth information indicates a communication function of each function entity corresponding to the candidate function split manner.

In some embodiments, before sending the first information, the first function entity may send the at least one candidate function split manner to the second function entity. For example, the first function entity sends any possible split option in the foregoing embodiments to the first target entity, for example, any one or more of Option 1 to Option 8, Option 7-1, Option 7-2, Option 7-2x, and Option 7-3.

For example, when the first function entity sends the at least one candidate function split manner, the first information sent by the first function entity to the second function entity in S102 may include an identifier indicating a first target function split manner and/or an identifier indicating a second target function split manner. In some examples, the identifier may be an identity (identity, ID) or an index (index). For example, the first information may include an identifier 1, and the identifier 1 indicates that the first target function split manner is "Option 2". It is assumed that the first target entity is a CU and the second target entity is a DU. In this case, the CU may determine, based on Option 2 indicated by the first information, that a function split point between the CU and the DU is located between PDCP and RLC. The CU may determine that a corresponding communication function includes RRC and PDCP.

In some other embodiments, before sending the first information, the first function entity may send fifth information to the second function entity, where the fifth information may indicate a communication function of each function entity corresponding to the candidate function split manner. For example, the candidate function split manner includes Option 2, and two second function entities corresponding to the candidate function split manner are a CU and a DU. In this case, the fifth information includes a communication function corresponding to the CU obtained through division in Option 2 and a communication function corresponding to the DU obtained through division in Option 2. For another example, the candidate function split manner includes Option 2 and Option 5, and two second function entities corresponding to the candidate function split manner are a CU and a DU. In this case, the fifth information includes a communication function corresponding to the CU obtained through division in Option 2, a communication function corresponding to the DU obtained through division in Option 2, a communication function corresponding to the CU obtained through division in Option 5, and a communication function corresponding to the DU obtained through division in Option 5.

For example, when the first function entity sends the fifth information, the first information sent by the first function entity to the second function entity in S102 may include identifiers indicating communication functions corresponding to different function entities. For example, the first information may include an identifier 2, and the second function entity may determine, based on the identifier 2, a communication function of each function entity corresponding to the second function entity, and configure a communication function corresponding to the second function entity.

In some other embodiments, before sending the first information, the first function entity may send the at least one candidate function split manner and the fifth information to the second function entity. It may be understood that, in this embodiment, the fifth information needs to include a communication function of each function entity corresponding to each of the at least one sent candidate function split manner. For example, the at least one candidate function split manner sent by the first function entity to the second function entity includes Option 2 and Option 6. In this case, the fifth information sent by the first function entity to the second function entity needs to include communication functions corresponding to two second function entities obtained through division in Option 2 and communication functions corresponding to two second function entities obtained through division in Option 6.

In embodiments of this application, a plurality of candidate function split manners and/or corresponding communication functions may be further notified to another function entity in advance, so that only some information needs to be indicated when a target policy is indicated, thereby reducing resource overheads in a communication process.

In the communication method provided in embodiments of this application, to more properly split the communication function corresponding to the function entity, determining the first target policy and/or the second target policy in S101 may include: determining the first target policy and/or the second target policy based on one or more of second information corresponding to a first interface, second information corresponding to a second interface, fourth information, third information corresponding to the first target entity, third information corresponding to the second target entity, and third information corresponding to the third target entity, where the first interface is a communication interface between the first target entity and the second target entity, the second interface is a communication interface between the second target entity and the third target entity, the second information indicates a network communication status corresponding to the communication interface, the third information indicates a processing resource status corresponding to the function entity, and the fourth information indicates a QoS requirement corresponding to at least one service.

In some embodiments, the first function entity may determine the first target policy and/or the second target policy based on one or more of the second information corresponding to the first interface, the second information corresponding to the second interface, the fourth information, the third information corresponding to the first target entity, the third information corresponding to the second target entity, and the third information corresponding to the third target entity.

For example, the first function entity may determine the first target policy based on the second information corresponding to the first interface. For another example, the first function entity may determine the second target policy based on the second information corresponding to the second interface and the third information corresponding to the second target entity. For another example, the first function entity may determine the first target policy based on the second information corresponding to the first interface, the third information corresponding to the first target entity, and the third information corresponding to the second target entity. For another example, the first function entity may determine the first target policy and the second target policy based on the second information corresponding to the first interface, the fourth information, the third information corresponding to the first target entity, and the third information corresponding to the third target entity. For another example, the first function entity may determine the first target policy and the second target policy based on the second information corresponding to the first interface, the second information corresponding to the second interface, the fourth information, the third information corresponding to the first target entity, and the third information corresponding to the third target entity. For another example, the first function entity may determine the first target policy and the second target policy based on the second information corresponding to the first interface, the second information corresponding to the second interface, the fourth information, the third information corresponding to the first target entity, the third information corresponding to the second target entity, and the third information corresponding to the third target entity.

Certainly, only a limited quantity of examples are shown above. The first function entity may further determine the first target policy and/or the second target policy based on any other one, two, three, four, five, or six parameters. This is not limited in embodiments of this application.

In some examples, the first interface may be a communication interface between the first target entity and the second target entity. For example, if the first target entity is a CU and the second target entity is a DU, the first interface may be an interface corresponding to a midhaul link. In some other examples, the second interface may be a communication interface between the second target entity and the third target entity. For example, if the second target entity is a DU and the second target entity is an RU, the second interface may be an interface corresponding to a fronthaul link.

In some embodiments, the second information may indicate a network communication status corresponding to the communication interface. For example, the second information corresponding to the first interface may indicate a network communication status corresponding to the first interface. For another example, the second information corresponding to the second interface may indicate a network communication status corresponding to the second interface.

In some examples, the first function entity may further obtain second information from the first target entity, the second target entity, and/or the third target entity. For example, the first function entity obtains, from the first target entity, the second information corresponding to the first interface. For another example, the first function entity obtains, from the second target entity, the second information corresponding to the first interface, and/or the first function entity obtains, from the second target entity, the second information corresponding to the second interface. For another example, the first function entity obtains, from the third target entity, the second information corresponding to the second interface.

In some examples, the second information may include a bandwidth resource of the communication interface.

In some examples, the second information may include a transmission delay of the communication interface.

In some examples, the second information may include a packet loss rate of the communication interface.

In some examples, the second information may include reliability of the communication interface.

In some examples, the second information may include a bandwidth resource of the communication interface and a transmission delay of the communication interface. In some examples, the second information may include a bandwidth resource of the communication interface, a transmission delay of the communication interface, and reliability of the communication interface. In some examples, the second information may include a bandwidth resource of the communication interface, a transmission delay of the communication interface, a packet loss rate of the communication interface, and reliability of the communication interface.

It may be understood that only a limited quantity of examples are shown above. The second information may further include any other two or three items. This is not limited in embodiments of this application.

In other examples, the second information may further include any other parameter related to the network communication status. This is not limited in embodiments of this application.

Embodiments of this application provide a plurality of possible parameters included in the second information, so that the first function entity determines an appropriate target policy based on the parameters in the second information.

In some embodiments, the third information may indicate a processing resource status corresponding to the function entity. For example, third information corresponding to the first target entity may indicate a processing resource status corresponding to the first target entity. For another example, third information corresponding to the second target entity may indicate a processing resource status corresponding to the second target entity. For another example, third information corresponding to the third target entity may indicate a processing resource status corresponding to the third target entity.

In some examples, the first function entity may further obtain third information from the first target entity, the second target entity, and/or the third target entity. For example, the first function entity obtains, from the first target entity, third information corresponding to the first target entity. For another example, the first function entity obtains, from the second target entity, third information corresponding to the second target entity. For another example, the first function entity obtains, from the third target entity, third information corresponding to the third target entity.

In some examples, the third information may include processor utilization.

In some examples, the third information may include memory utilization.

In some examples, the third information may include disk utilization.

In some examples, the third information may include processor utilization and memory utilization. In some examples, the third information may include processor utilization and disk utilization. In some examples, the third information may include memory utilization and disk utilization. In some examples, the third information may include processor utilization, memory utilization, and disk utilization.

In other examples, the third information may further include any other parameter related to the processing resource status. This is not limited in embodiments of this application.

Embodiments of this application provide a plurality of possible parameters included in the third information, so that the first function entity determines an appropriate target policy based on the parameters in the third information.

In some embodiments, the fourth information may indicate a QoS requirement corresponding to at least one service.

In some examples, the first function entity may further obtain fourth information from the first target entity, the second target entity, the third target entity, and/or a core network device. For example, the first function entity obtains the fourth information from the first target entity. For another example, the first function entity obtains the fourth information from the second target entity. For another example, the first function entity obtains the fourth information from the third target entity. For another example, the first function entity obtains the fourth information from the core network device.

In some embodiments, the fourth information may include a packet delay budget (packet delay budget, PDB).

In some embodiments, the fourth information may include a guaranteed bit rate (guaranteed bit rate, GBR).

In some embodiments, the fourth information may include a packet error rate (packet error rate, PER).

In some embodiments, the fourth information may include a PDB and a GBR. In some embodiments, the fourth information may include a PDB and a PER. In some embodiments, the fourth information may include a GBR and a PER. In some embodiments, the fourth information may include a PDB, a GBR, and a PER.

In other examples, the fourth information may further include any other QoS-related parameter. This is not limited in embodiments of this application.

Embodiments of this application provide a plurality of possible parameters included in the fourth information, so that the first function entity determines an appropriate target policy based on the parameters in the fourth information, to meet a plurality of possible QoS requirements.

It may be understood that, in embodiments of this application, the target policy may be comprehensively determined based on dimensions such as a network communication status of a communication interface, a processing resource status of a function entity, and a QoS requirement of a service. In this way, a communication function corresponding to the function entity is more properly split.

In some embodiments, the first function entity may determine the first target policy and/or the second target policy based on a relationship between at least one threshold and one or more of the second information corresponding to the first interface, the second information corresponding to the second interface, the fourth information, the third information corresponding to the first target entity, the third information corresponding to the second target entity, and the third information corresponding to the third target entity.

In some examples, assuming that the threshold is related to bandwidth, the first function entity may determine the first target policy based on a bandwidth resource of the first interface; or the first function entity may determine the first target policy based on at least one of a bandwidth resource of the first interface, the fourth information, the third information corresponding to the first target entity, and the third information corresponding to the second target entity.

For example, the first target entity is a CU, the second target entity is a DU, the first interface is an interface corresponding to a midhaul link, and the threshold is related to bandwidth. Assuming that the bandwidth resource of the first interface is less than or equal to the threshold, the first function entity may select some split manners in which the CU occupies low bandwidth. For example, Option 2 may be selected.

In some other examples, if the first function entity determines the first target policy and/or the second target policy based on the at least one candidate function split manner, the first function entity may determine the first target policy and/or the second target policy based on a quantity of candidate function split manners and one or more thresholds. For example, when determining the target policy based on two candidate function split manners, the first function entity may determine the target policy based on one threshold. For another example, when determining the target policy based on three candidate function split manners, the first function entity may determine the target policy based on two thresholds.

For example, the first function entity determines the target policy based on two candidate function split manners, and there is one threshold. It is assumed that the threshold is related to bandwidth, the first target entity is a CU, and the second target entity is a DU. For example, when the bandwidth resource of the first interface is less than or equal to the threshold, the first function entity may determine the first target policy based on a split manner in which the CU corresponds to fewer communication functions in the two candidate function split manners. For another example, when the bandwidth resource of the first interface is greater than the threshold, the first function entity may determine the first target policy based on a split manner in which the DU corresponds to fewer communication functions in the two candidate function split manners.

For another example, the first function entity determines the target policy based on two candidate function split manners, and there is one threshold. It is assumed that the threshold is related to a GBR in a QoS requirement or traffic, the first target entity is a CU, and the second target entity is a DU. For example, when the GBR in the QoS requirement or the traffic is less than or equal to the threshold, the first function entity may determine the first target policy based on a split manner in which the DU corresponds to fewer communication functions in the two candidate function split manners. For another example, when the GBR in the QoS requirement or the traffic is greater than the threshold, the first function entity may determine the first target policy based on a split manner in which the CU corresponds to fewer communication functions in the two candidate function split manners.

For another example, the first function entity determines the target policy based on two candidate function split manners, and there is one threshold. It is assumed that the threshold is related to a processing resource status of a DU, the first target entity is a CU, and the second target entity is a DU. For example, when the processing resource status of the DU is less than or equal to the threshold, the first function entity may determine the first target policy based on a split manner in which the DU corresponds to fewer communication functions in the two candidate function split manners. For another example, when the processing resource status of the DU is greater than the threshold, the first function entity may determine the first target policy based on a split manner in which the CU corresponds to fewer communication functions in the two candidate function split manners.

For another example, the first function entity determines the target policy based on two candidate function split manners, and there is one threshold. It is assumed that the threshold is related to energy consumption of a DU, the first target entity is a CU, and the second target entity is a DU. For example, when the energy consumption of the DU is less than or equal to the threshold, the first function entity may determine the first target policy based on a split manner in which the DU corresponds to more communication functions in the two candidate function split manners. Correspondingly, in this split manner, the CU corresponds to fewer communication functions, and energy consumption is also lower. For another example, when the energy consumption of the DU is greater than the threshold, the first function entity may determine the first target policy based on a split manner in which the CU corresponds to more communication functions in the two candidate function split manners. Correspondingly, in this split manner, the DU corresponds to fewer communication functions, and energy consumption is also lower.

For another example, the first function entity determines the target policy based on two candidate function split manners, and there is one threshold. It is assumed that the threshold is related to a PDB in a QoS requirement, the first target entity is a CU, and the second target entity is a DU. For example, when the PDB in the QoS requirement is less than or equal to the threshold, the first function entity may determine the first target policy based on a split manner in which the DU corresponds to fewer communication functions in the two candidate function split manners. Correspondingly, in this split manner, the CU corresponds to more communication functions, and a transmission delay required by an interface between the CU and the DU is shorter. For another example, when the PDB in the QoS requirement is greater than the threshold, the first function entity may determine the first target policy based on a split manner in which the CU corresponds to fewer communication functions in the two candidate function split manners. Correspondingly, in this split manner, the DU corresponds to more communication functions, and a transmission delay required by an interface between the CU and the DU is longer.

It may be understood that, when the corresponding parameter is the same as the threshold, a to-be-used split manner may be determined based on an actual situation. The foregoing description is merely a possible implementation. This is not limited in embodiments of this application.

In embodiments of this application, the target policy may be comprehensively determined based on a threshold and information in a plurality of dimensions. In this way, a communication function corresponding to the function entity is more properly split.

In the communication method provided in embodiments of this application, based on any one of the foregoing embodiments, the first information may include at least one of the following parameters: a first identifier, a second identifier, a function split manner corresponding to the first target policy, a function split manner corresponding to the second target policy, the communication function of the first target entity and the communication function of the second target entity that correspond to the first target policy, the communication function of the second target entity and the communication function of the third target entity that correspond to the second target policy, first granularity information of the first target policy; or second granularity information of the second target policy.

In some examples, the first information may include the first identifier, where the first identifier indicates the first target policy.

In some examples, the first information may include the second identifier, where the second identifier indicates the second target policy.

In some examples, the first information may include the function split manner corresponding to the first target policy. For example, the first identifier may indicate a first target split manner corresponding to the first target policy, for example, Option 3 or Option 8.

In some examples, the first information may include the function split manner corresponding to the second target policy. For example, the second identifier may indicate a second target split manner corresponding to the second target policy, for example, Option 5 or Option 7-3.

In some examples, the first information may include the communication function of the first target entity and the communication function of the second target entity that correspond to the first target policy.

In some examples, the first information may include the communication function of the second target entity and the communication function of the third target entity that correspond to the second target policy.

In some examples, the first information may include the first granularity information of the first target policy. For example, the first granularity information may indicate that the first target policy corresponds to a terminal, a PDU session, a QoS flow, or a DRB.

In some examples, the first information may include the second granularity information of the second target policy. For example, the second granularity information may indicate that the second target policy corresponds to a terminal, a PDU session, a QoS flow, or a DRB.

In some examples, the first information may include the first identifier and the second identifier. Alternatively, the first information may include the first identifier, the second identifier, and the function split manner corresponding to the first target policy. Alternatively, the first information may include the first identifier, the second identifier, the function split manner corresponding to the first target policy, and the communication function of the second target entity and the communication function of the third target entity that correspond to the second target policy. Alternatively, the first information may include the first identifier, the second identifier, the function split manner corresponding to the first target policy, the first granularity information of the first target policy, and the second granularity information of the second target policy. Alternatively, the first information may include the first identifier, the second identifier, the function split manner corresponding to the first target policy, the first granularity information of the first target policy, the second granularity information of the second target policy, and the communication function of the first target entity and the communication function of the second target entity that correspond to the first target policy. Alternatively, the first information may include the first identifier, the second identifier, the function split manner corresponding to the first target policy, the function split manner corresponding to the second target policy, the first granularity information of the first target policy, the second granularity information of the second target policy, and the communication function of the first target entity and the communication function of the second target entity that correspond to the first target policy. Alternatively, the first information may include the first identifier, the second identifier, the function split manner corresponding to the first target policy, the function split manner corresponding to the second target policy, the first granularity information of the first target policy, the second granularity information of the second target policy, the communication function of the first target entity and the communication function of the second target entity that correspond to the first target policy, and the communication function of the second target entity and the communication function of the third target entity that correspond to the second target policy.

It may be understood that only a limited quantity of examples are shown above. The first information may further include any other two, three, four, five, six, or seven items. This is not limited in embodiments of this application.

Embodiments of this application provide a plurality of possible parameters included in the first information, so that a corresponding function entity flexibly adjusts, based on the parameters included in the first information, a communication function corresponding to the function entity.

In the communication method provided in embodiments of this application, a possible representation form of the first function entity in the network communication system is considered. The first function entity, the first target entity, the second target entity, and the third target entity in any one of the foregoing embodiments are function entities that are independent of each other; or the first function entity is integrated into the first target entity, the second target entity, or the third target entity.

In some embodiments, the first function entity, the first target entity, the second target entity, and the third target entity may be function entities that are independent of each other. In other words, the first function entity and the second function entity may be function entities that are independent of each other.

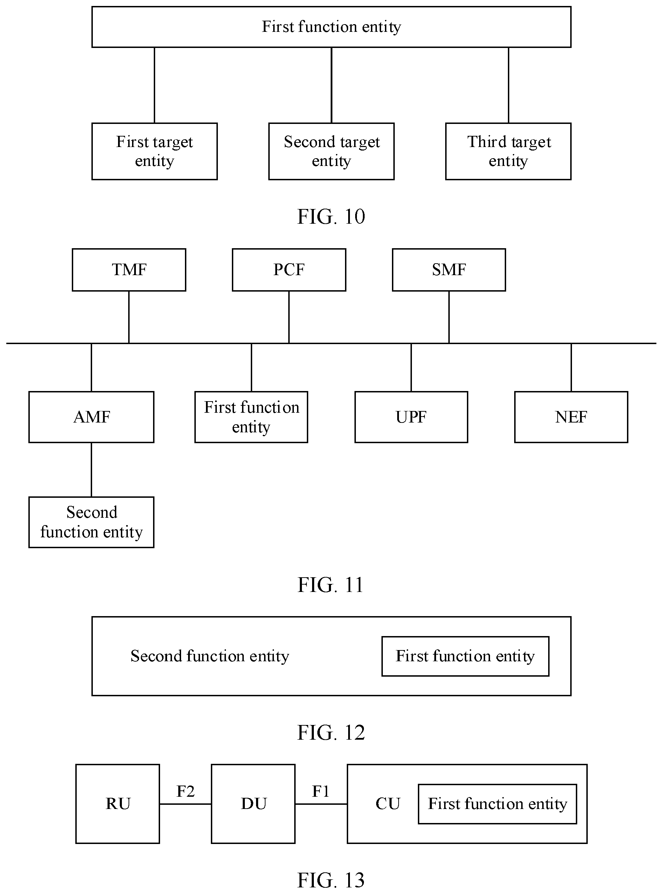

In some examples, refer to FIG. 10. A first function entity may be a function entity different from all of a first target entity, a second target entity, and a third target entity. The first function entity may be deployed on a RAN side, a core network side, or a network management domain side. In this case, the first function entity may be communicatively connected to any one or more of the first target entity, the second target entity, and the third target entity.

For example, if the first function entity is located on the RAN side, a communication connection between the first function entity and any second function entity may be based on a newly defined interface. In this example, the newly defined interface is configured to implement communication between the first function entity and the second function entity. For example, if the second function entity is a function entity in a RAN, the newly defined interface is configured to implement intra RAN communication.

For another example, if the first function entity is located on the core network side, a communication connection between the first function entity and any second function entity may be based on a newly defined interface. Alternatively, a communication connection between the first function entity and any second function entity may partially reuse an interface between a core network and a RAN. Refer to FIG. 11. It is assumed that the core network element further includes an AMF, a task management function (task management function, TMF), a policy control function (policy control function, PCF), an SMF, a UPF, a network exposure function (network exposure function, NEF), and the like. Assuming that the second function entity communicates with an AMF on a RAN side through an N2 interface, the first function entity may reuse the N2 interface. For example, the first function entity implements communication with the second function entity through a newly defined service-based interface between the first function entity and the AMF and the N2 interface. The newly defined service-based interface in this example may be configured to implement communication between the first function entity and the AMF. Certainly, if the second function entity is communicatively connected to another core network element, the newly defined service-based interface may further implement communication between the first function entity and the core network element communicatively connected to the second function entity.

For another example, if the first function entity is located in the network management domain, a communication connection between the first function entity and any second function entity may be based on a newly defined interface. In this example, the newly defined interface is configured to implement communication between a function entity in a network management domain and the second function entity. For example, if the second function entity is a function entity in a RAN, the newly defined interface is configured to implement communication between the function entity in the network management domain and the RAN.

In some other examples, refer to FIG. 12. A first function entity may be integrated into a first target entity, a second target entity, or a third target entity. In other words, the first function entity may be integrated into one or more second function entities.

For example, the second function entity is a function entity in a RAN, for example, the second function entity is a CU, a DU, and/or an RU. In this case, the first function entity may be integrated into the CU, the DU, and/or the RU. For another example, the first function entity may also be integrated into a near-real-time radio access network intelligent controller (near-real-time radio access network intelligent controller, NRT-RIC) or a non-real-time radio access network intelligent controller (non-real-time radio access network intelligent controller, Non-RT RIC) in an O-RAN architecture.

For another example, the second function entity is a function entity in a core network, for example, the second function entity is an AMF. In this case, the first function entity may be integrated into the AMF.

For another example, the second function entity is a function entity in a network management domain, for example, the second function entity is OAM. In this case, the first function entity may be integrated into the OAM.

It may be understood that the first function entity may have different advantages when being deployed at different locations or in function entities at different layers on the RAN side. For example, the first function entity is deployed in a CU, a DU, and/or an RU. When the first function entity is deployed in the CU, because the CU may be communicatively connected to a plurality of DUs, the first function entity may obtain more global network status information, and therefore may determine a corresponding target policy more globally. Compared with the first function entity deployed in the CU, the first function entity deployed in the DU can more quickly obtain processing resource statuses, network communication statuses, and the like of different entities, and therefore can more quickly determine a corresponding target policy, thereby increasing a processing rate. It may be understood that, compared with the first function entity deployed in the DU, the first function entity deployed in the RU can more quickly determine a corresponding target policy, thereby increasing a processing rate. In other words, when the first function entity is deployed more closely to a higher layer, the first function entity can more globally determine the target policy, and when the first function entity is deployed more closely to a lower layer, the first function entity can more quickly determine the target policy.

In some examples, the first function entity may be simultaneously deployed on a plurality of second function entities. In this case, advantages of both global and real-time split can be considered. For example, the first function entity may be deployed in the CU and the DU. In this case, the first function entity located in the CU may be responsible for function split between the CU and the DU, and the first function entity located in the DU may be responsible for function split between the DU and the RU. For another example, the first function entity may be deployed in the DU and the RU. In this case, the first function entity located in the DU may be responsible for function split between the CU and the DU, and the first function entity located in the RU may be responsible for function split between the DU and the RU.

Certainly, 5G NR is used as an example for description in FIG. 10 to FIG. 12. Embodiments of this application may be further applied to a future mobile communication system architecture. For example, the first function entity is deployed in any network element function like a RAN, a core network, or a network management domain defined in a future mobile communication system. For example, a possible future mobile communication system architecture includes a radio network area (radio network area, RNA) and an RU. The RNA may include a CU, a DU, and/or a core network function. The first function entity may be deployed on the RNA and/or the RU, to implement split of a communication function between the RNA and the RU.

Embodiments of this application provide a plurality of deployment manners of the first function entity, to be applicable to a plurality of possible network architectures. In this way, a plurality of network architectures can support flexible split of network functions including a RAN function, to adapt to QoS requirements of different services. In addition, a deployment manner of the first function entity has an advantage of global, real-time, or hierarchical processing.

The following describes the foregoing solutions based on more specific examples.

### Example A:

In some embodiments, refer to the diagram of the network architecture shown in FIG. 13. The first function entity may be deployed in a CU, and the second function entity may include a CU, a DU, and an RU. The first target entity may be a CU, the second target entity may be a DU, and the third target entity may be an RU. The CU may communicate with the DU through an F1 interface, and the DU may communicate with the RU through an F2 interface.

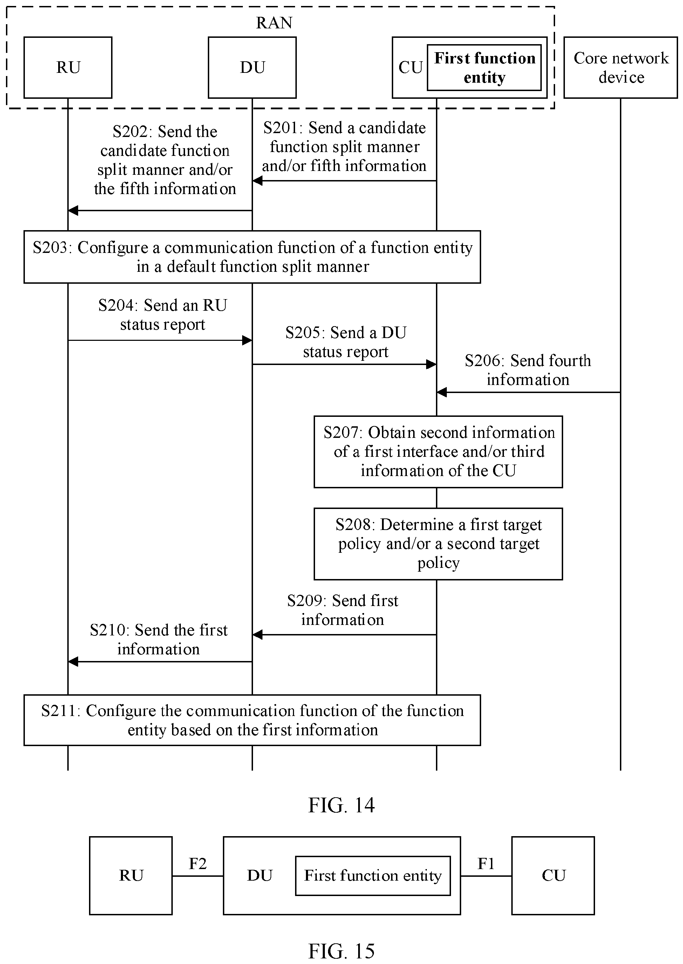

As shown in FIG. 14, an embodiment of this application further provides a communication method. The method is applied to the network architecture shown in FIG. 13. The method may include the following steps.

S201: A first function entity sends a candidate function split manner and/or fifth information to a DU.

For example, the first function entity may send at least one candidate function split manner and/or fifth information to the DU.

S202: The DU sends the candidate function split manner and/or the fifth information to an RU.

For example, the DU may forward, to the RU, the at least one candidate function split manner and/or the fifth information received in S201.

In some examples, when sending the at least one candidate function split manner and/or the fifth information to the RU, the DU may send only a candidate function split manner and/or fifth information related to communication function split between the RU and the DU. In other words, a part of the at least one candidate function split manner may be used only for communication function split between a CU and the DU, and this part does not need to be sent to the RU. Similarly, the fifth information may also include a communication function of each function entity related only to the communication function split between the CU and the DU, and this part does not need to be sent to the RU.

It may be understood that S201 and S202 are optional. In some cases, the at least one candidate function split manner and/or the fifth information may be further preconfigured on the CU, the DU, and/or the RU.

S203: The second function entity configures a communication function of the function entity in a default function split manner.

For example, any second function entity like a CU, a DU, or an RU may configure a communication function of the function entity in a default function split manner. The default function split manner may be predefined in a protocol, or may be preconfigured. The purpose is to ensure that a communication service can be normally executed before the first function entity adjusts a communication function of the second function entity.

In some examples, if there is no communication service, S203 may not be performed.

In some examples, the second function entity may further locally back up a corresponding to-be-executed communication function in advance based on the at least one candidate function split manner and/or the fifth information. It is assumed that there is Option 2, a communication function corresponding to each function entity in Option 2, Option 5, and a communication function corresponding to each function entity in Option 5. A DU is used as an example. The DU may configure, based on Option 2 and/or the communication function corresponding to each function entity in Option 2, a communication function corresponding to the DU in Option 2; and the DU may configure, based on Option 5 and/or the communication function corresponding to each function entity in Option 5, the communication function corresponding to the DU in Option 5. In this case, both the configured communication function corresponding to the DU in Option 2 and the configured communication function corresponding to the DU in Option 5 may be set to an inactive state. Certainly, if an option is exactly the default function split manner, a communication function corresponding to the DU in the option may be set to an active state.

For another example, the second function entity may generate or deregister, based on a requirement by using a virtualization technology or a container technology, communication functions corresponding to the second function entity in different options. For a specific implementation process of the virtualization technology or the container technology, refer to a related technology. Details are not described herein in embodiments of this application.

S204: The RU sends an RU status (status) report (report) to the DU.

In some examples, the RU status report may include third information corresponding to the RU. In some other examples, the RU status report may further include second information corresponding to a second interface.

S205: The DU sends a DU status report to the first function entity.

In some examples, the DU status report may include third information corresponding to the DU, the third information corresponding to the RU received in S204, and second information corresponding to a second interface. The second information corresponding to the second interface may be received from the RU in S204. Alternatively, the second information corresponding to the second interface may be determined by the DU. In some other examples, the DU status report may further include second information corresponding to a first interface.

S206: A core network device sends fourth information to the first function entity.

Alternatively, S206 may be performed in advance, that is, the first function entity obtains the fourth information in advance. For example, S206 may be performed before S201 to S203, or in any time period in S201 to S203. This is not limited in embodiments of this application.

S207: The CU obtains the second information of the first interface and/or third information of the CU.

If the second information corresponding to the first interface is carried in the DU status report in S205, the CU may not need to obtain the second information. Considering that the first function entity is integrated into the CU, after obtaining the foregoing information, the CU may transfer the foregoing information to the first function entity through an internal interface.

In addition, there is no strict sequence of performing the steps in S204 to S207. This is not limited in embodiments of this application. If S204 and S205 are simultaneously performed, or S204 is performed after S205, the DU may separately send, to the first function entity, the third information corresponding to the RU and/or the second information corresponding to the second interface.

S208: The first function entity determines a first target policy and/or a second target policy.

For example, the first function entity determines the first target policy and/or the second target policy based on one or more of the third information corresponding to the RU, the third information corresponding to the DU, the third information of the CU, the fourth information, the second information corresponding to the first interface, and the second information corresponding to the second interface. For example, the first function entity may determine a first target function split manner and/or a second target function split manner from the at least one candidate function split manner; and obtain the first target policy based on the first target function split manner, and obtain the second target policy based on the second target function split manner.

S209: The first function entity sends first information to the DU.

S210: The DU sends the first information to the RU.

For example, the DU forwards the first information received in S209 to the RU.

For another example, the DU parses out, based on the first information received in S209, a target policy corresponding to the RU. The DU forwards the target policy to the RU. It may be understood that, in this case, the first information sent by the DU may not include information related to a target policy corresponding to the CU.

In some examples, when the first function entity is also deployed in the DU, the first information obtained by the DU in S209 may indicate only communication function split between the DU and the CU. In this case, the first function entity deployed in the DU may further implement communication function split between the DU and the RU based on a communication function assigned to the DU.

S211: The second function entity configures the communication function of the function entity based on the first information.

For example, any second function entity like a CU, a DU, or an RU may configure a communication function of the function entity based on a corresponding target policy indicated by the first information.

In some examples, if a communication function corresponding to the second function entity in each candidate function split manner is preconfigured for the second function entity, and is set to an inactive state, in S211, a communication function that matches the target policy indicated by the first information may be set to an active state based on the target policy, and a remaining unmatched communication function is set to an inactive state or disabled. The matched communication function may be understood as follows: Assuming that the target policy indicated by the first information corresponds to Option 2, the communication function corresponding to the second function entity in Option 2 is the matched communication function.

It may be understood that, for specific implementation processes of S201 to S211, refer to the descriptions of the embodiments in FIG. 6 to FIG. 12. Details are not described herein again in embodiments of this application.

The embodiment described in Example A provides a process of flexibly splitting communication functions when the first function entity is integrated into the CU. In this way, the CU can flexibly split communication functions of different network entities from the global perspective based on a network transmission status and a processor resource status that are sent by each function entity, thereby reducing overall network operating overheads and meeting requirements of different service traffic.

### Example B:

In some embodiments, refer to the diagram of the network architecture shown in FIG. 15. The first function entity may be deployed in a DU, and the second function entity may include a CU, a DU, and an RU. The first target entity may be a CU, the second target entity may be a DU, and the third target entity may be an RU. The CU may communicate with the DU through an F1 interface, and the DU may communicate with the RU through an F2 interface.

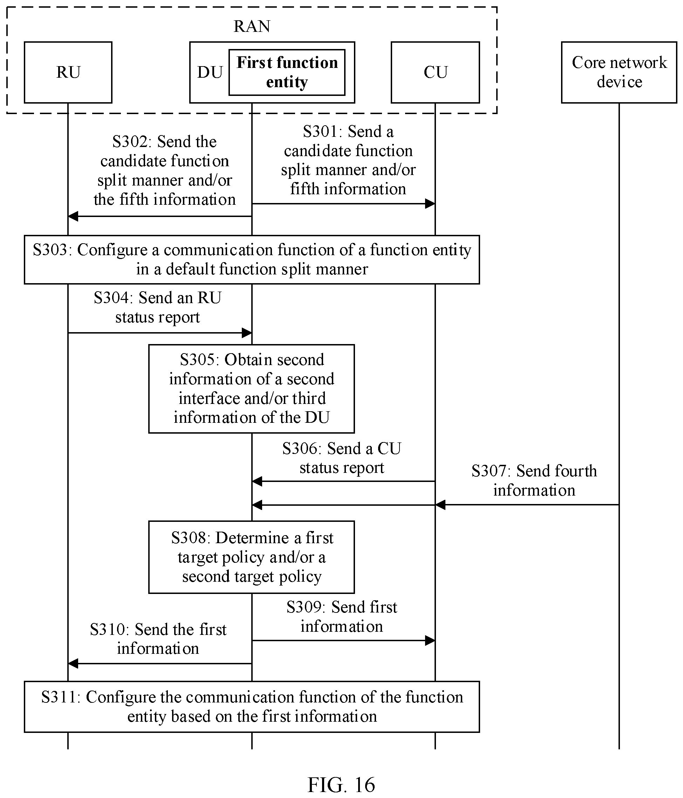

As shown in FIG. 16, an embodiment of this application further provides a communication method. The method is applied to the network architecture shown in FIG. 15. The method may include the following steps.

S301: A first function entity sends a candidate function split manner and/or fifth information to a CU.

For example, the first function entity may send at least one candidate function split manner and/or fifth information to the CU.

S302: The first function entity sends the candidate function split manner and/or the fifth information to an RU.

It may be understood that S301 and S302 are optional.

S303: The second function entity configures a communication function of the function entity in a default function split manner.

S304: The RU sends an RU status report to the first function entity.

S302 to S304 are similar to S202 to S204. For details, refer to the descriptions of the corresponding embodiment in FIG. 14. Details are not described herein again in embodiments of this application.

S305: A DU obtains second information of a second interface and/or third information of the DU.

If the second information corresponding to the second interface is carried in the DU status report in S205, the CU may not need to obtain the second information. In some examples, the DU may further obtain second information of a first interface.

S306: The CU sends a CU status report to the first function entity.

In some examples, the CU status report may include third information corresponding to the CU. In some other examples, the CU status report may further include the second information corresponding to the first interface. It may be understood that the second information corresponding to the first interface may be obtained by the CU and sent to the first function entity, or may be obtained by the DU. When the DU obtains the second information corresponding to the first interface, the CU status report may not include the second information corresponding to the first interface.

S307: A core network device sends fourth information to the first function entity.

For example, the core network device sends the fourth information to the CU. Then, the CU forwards the fourth information to the first function entity.

S308: The first function entity determines a first target policy and/or a second target policy.

S308 is similar to S208. For details, refer to the descriptions of the corresponding embodiment in FIG. 14. Details are not described herein again in embodiments of this application.

S309: The first function entity sends first information to the CU.

For example, the first information sent by the first function entity to the CU does not include information related to a target policy corresponding to the DU and the RU.

S310: The first function entity sends the first information to the RU.

For example, the first information sent by the first function entity to the RU does not include information related to a target policy corresponding to the CU and the DU.

S311: The second function entity configures the communication function of the function entity based on the first information.

S311 is similar to S211. For details, refer to the descriptions of the corresponding embodiment in FIG. 14. Details are not described herein again in embodiments of this application.

It may be understood that for specific implementation processes of S301 to S311, refer to the descriptions of the embodiments in FIG. 6 to FIG. 12. Details are not described herein again in embodiments of this application.

The embodiment described in Example B provides a process of flexibly splitting communication functions when the first function entity is integrated into the DU. In this way, the DU can obtain, in real time, a network transmission status and a processor resource status that are sent by each function entity, to split communication functions of different network entities in more real time, thereby meeting requirements of different service traffic and reducing overall network operating overheads.

Other embodiments may further include: Example C, that is, the first function entity is deployed in the RU; and Example D, that is, the first function entity and the second function entity are independently deployed.

For Example C, a difference lies in that the DU needs to send a DU status report to the first function entity, and the CU needs to send a CU status report to the DU and forward the CU status report to the first function entity via the DU. The RU needs to obtain third information corresponding to the RU and/or second information corresponding to a second interface. The first function entity sends first information to the DU, and the DU sends the first information to the CU.

For Example D, a difference lies in that at least one second function entity may send a corresponding status report to the first function entity. The first function entity sends first information to the second function entity. Certainly, a connection relationship between the first function entity and the second function entity may be considered. For example, a second function entity directly connected to the first function entity may directly send a status report of the second function entity to the first function entity, and may directly obtain first information from the first function entity. A second function entity that is not directly connected to the first function entity may forward a status report of the second function entity via another second function entity, and obtain, via the another second function entity, first information sent by the first function entity.

For specific implementation processes of Example C and Example D, refer to the descriptions of the corresponding embodiments in Example A and Example B. Details are not described herein again in embodiments of this application.

In the communication method provided in embodiments of this application, it is considered that a future network node may not only have a transmission function, but also have an application service processing function, for example, training and inference of artificial intelligence (artificial intelligence, AI). Therefore, embodiments of this application are also applicable to splitting a computing function of an application server together with a RAN function and a core network function, and indicating the functions to different function entities. This is not limited in embodiments of this application.

It should be noted that the foregoing plurality of embodiments may be combined, and a combined solution is implemented. Optionally, some operations in procedures of the foregoing method embodiments are randomly combined, and/or a sequence of some operations is randomly changed. In addition, an execution sequence of steps of each procedure is merely an example, and does not constitute a limitation on an execution sequence of the steps. The steps may be performed in another execution sequence. This is not intended to indicate that the execution sequence is the only sequence in which these operations can be performed. A person of ordinary skill in the art may figure out a plurality of manners to reorder the operations described in this specification. In addition, it should be noted that process details related to a specific embodiment in this specification are also applicable to another embodiment in a similar manner, or different embodiments may be used in combination.

It may be understood that, to implement functions in the foregoing embodiments, the base station and the terminal include corresponding hardware structures and/or software modules for performing various functions. A person skilled in the art should be easily aware that, in embodiments of this application, the units and method steps in the examples described with reference to embodiments disclosed in embodiments of this application can be implemented by hardware or a combination of hardware and computer software. Whether a function is performed by hardware or hardware driven by computer software depends on particular application scenarios and design constraints of the technical solutions.

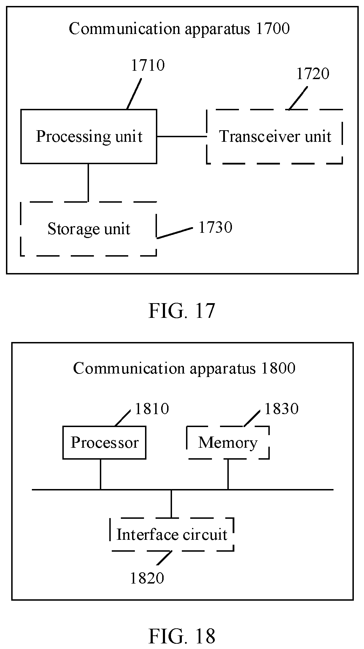

FIG. 17 and FIG. 18 are diagrams of structures of possible communication apparatuses according to embodiments of this application. These communication apparatuses may be configured to implement functions of any possible transmitter in the foregoing method embodiments. Therefore, beneficial effects of the foregoing method embodiments can also be implemented. In embodiments of this application, the communication apparatus may be a transmitter, or may be a module used in the transmitter, for example, a chip.

As shown in FIG. 17, the communication apparatus 1700 includes a processing unit 1710.

In a possible implementation, the communication apparatus 1700 may further include a transceiver unit 1720.

In a possible implementation, the communication apparatus 1700 may further include a storage unit 1730.

In a possible implementation, the communication apparatus 1700 may further include a transceiver unit 1720 and a storage unit 1730.

The communication apparatus 1700 is configured to implement functions of any function entity in the method embodiments shown in FIG. 6, FIG. 14, and FIG. 16.

When the communication apparatus 1700 is configured to implement the functions of the first function entity in the method embodiment shown in FIG. 6, the processing unit 1710 is configured to determine a first target policy and/or a second target policy; the transceiver unit 1720 is configured to send first information; the processing unit 1710 is further configured to: perform all operations performed by the communication apparatus 1700 except receiving and sending operations in the embodiment shown in FIG. 6, and/or support another process of the technology described in this specification; and the storage unit 1730 is configured to store any data, computer instructions, and/or a computer program that may be involved in embodiments of this application.

When the communication apparatus 1700 is configured to implement the functions of the second function entity in the method embodiment shown in FIG. 6, the transceiver unit 1720 is configured to receive first information from a first function entity; the processing unit 1710 is configured to configure, based on the first information, a communication function corresponding to the second function entity; the processing unit 1710 is further configured to: perform all operations performed by the communication apparatus 1700 except receiving and sending operations in the embodiment shown in FIG. 6, and/or support another process of the technology described in this specification; and the storage unit 1730 is configured to store any data, computer instructions, and/or a computer program that may be involved in embodiments of this application.

For more detailed descriptions of the processing unit 1710 and the transceiver unit 1720, refer to related descriptions in the method embodiments shown in FIG. 6, FIG. 14, and FIG. 16. The processing unit 1710 and the transceiver unit 1720 may further perform another step. For a specific implementation, refer to the method embodiments. Details are not described herein again.

Optionally, the transceiver unit 1720 may be a transceiver. The transceiver may include an antenna, a radio frequency circuit, and the like.

The processing unit 1710 may be a processor (or a processing circuit), for example, a baseband processor. The baseband processor may include one or more CPUs.

As shown in FIG. 18, the communication apparatus 1800 includes at least one processor 1810. In a possible implementation, the communication apparatus 1800 may further include an interface circuit 1820.

In a possible implementation, the communication apparatus 1800 may further include a memory 1830.

In a possible implementation, the communication apparatus 1800 may further include a memory 1830 and an interface circuit 1820.

In some embodiments, the processor 1810 and the memory 1830 are coupled to each other; and/or the processor 1810 and the interface circuit 1820 are coupled to each other. It may be understood that the interface circuit 1820 may be a transceiver or an input/output interface. The memory 1830 may be configured to: store computer instructions to be executed by the processor 1810, store input data needed for running the computer instructions by the processor 1810, or store data generated after the processor 1810 runs the computer instructions.

When the communication apparatus 1800 is configured to implement the methods shown in FIG. 6, FIG. 14, and FIG. 16, the processor 1810 may be configured to implement a function of the processing unit 1710, and/or the interface circuit 1820 may be configured to implement a function of the transceiver unit 1720, and/or the memory 1830 may be configured to implement a function of the storage unit 1730.

The communication apparatus shown in FIG. 17 or FIG. 18 is merely an example. In an actual application, the communication apparatus may have more or fewer components than those shown in FIG. 17 or FIG. 18, may combine two or more components, or may have different component configurations.

In embodiments of this application, that an entity A sends information to an entity B may be that A directly sends the information to B, or may be that A indirectly sends the information to B via another entity. Similarly, that the entity B receives information from the entity A may be that the entity B directly receives the information sent by the entity A, or may be that the entity B indirectly receives the information sent by the entity A via another entity. The entities A and B herein each may be a RAN node or a terminal, or may be a module in a RAN node or a terminal. Information sending and receiving may be information exchange between a RAN node and a terminal, for example, information exchange between a network device and a terminal. Alternatively, information sending and receiving may be information exchange between two RAN nodes, for example, information exchange between a CU and a DU. Alternatively, information sending and receiving may be information exchange between different modules in an apparatus, for example, information exchange between a chip in a terminal and another module in the terminal, or information exchange between a chip in a network device and another module in the network device.

In embodiments of this application, the network device sends a downlink signal or downlink information to the terminal device, where the downlink information is carried on a downlink channel; and the terminal device sends an uplink signal or uplink information to the network device, where the uplink information is carried on an uplink channel. The terminal device needs to establish a wireless connection to a cell controlled by the network device, to communicate with the network device. The cell that establishes the wireless connection to the terminal device is referred to as a serving cell of the terminal device.

It may be understood that, in embodiments of this application, a physical downlink shared channel (physical downlink shared channel, PDSCH) and a physical uplink shared channel (physical uplink shared channel, PUSCH) are merely examples of a downlink data channel and an uplink data channel. In different systems and different scenarios, the data channel and the control channel may have different names. This is not limited in embodiments of this application.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Alternatively, the storage medium may be a component of the processor. The processor and the storage medium may be disposed in an ASIC. In addition, the ASIC may be located in the network device or the terminal. Alternatively, the processor and the storage medium may exist in a network device or a terminal as discrete components.

All or a part of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise specified or a logical conflict occurs, terms and/or descriptions between different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, wherein the method is applied to a first function entity, and comprises:
determining a first target policy and/or a second target policy, wherein the first target policy indicates a communication function split manner of a first target entity and a second target entity, and the second target policy indicates a communication function split manner of the second target entity and a third target entity; and
sending first information, wherein the first information indicates the first target policy and/or the second target policy.

2. The method according to claim 1, wherein the method further comprises:
determining a first target function split manner from at least one candidate function split manner, wherein the first target function split manner has an association relationship with the first target policy; and/or
determining a second target function split manner from at least one candidate function split manner, wherein the second target function split manner has an association relationship with the second target policy, wherein
the candidate function split manner is a communication function split manner of two communicatively connected second function entities of different types, and the second function entity comprises at least one of the first target entity, the second target entity, and the third target entity.

3. The method according to claim 1 or 2, wherein determining the first target policy and/or the second target policy comprises:
determining the first target policy and/or the second target policy based on one or more of second information corresponding to a first interface, second information corresponding to a second interface, fourth information, third information corresponding to the first target entity, third information corresponding to the second target entity, and third information corresponding to the third target entity, wherein the first interface is a communication interface between the first target entity and the second target entity, the second interface is a communication interface between the second target entity and the third target entity, the second information indicates a network communication status corresponding to the communication interface, the third information indicates a processing resource status corresponding to the function entity, and the fourth information indicates a quality of service QoS requirement corresponding to at least one service.

4. The method according to claim 3, wherein determining the first target policy and/or the second target policy based on one or more of the second information corresponding to the first interface, the second information corresponding to the second interface, the fourth information, the third information corresponding to the first target entity, the third information corresponding to the second target entity, and the third information corresponding to the third target entity comprises:
determining the first target policy and/or the second target policy based on a relationship between at least one threshold and one or more of the second information corresponding to the first interface, the second information corresponding to the second interface, the fourth information, the third information corresponding to the first target entity, the third information corresponding to the second target entity, and the third information corresponding to the third target entity.

5. The method according to any one of claims 1 to 4, wherein the first target policy indicates that a communication function of the first target entity comprises radio resource control RRC, the second target policy indicates that a communication function of the second target entity comprises packet data convergence protocol PDCP, radio link control RLC, media access control MAC, and high physical layer HIGH PHY, and the second target policy indicates that a communication function of the third target entity comprises low physical layer LOW PHY;
the first target policy indicates that a communication function of the first target entity comprises RRC and PDCP, the second target policy indicates that a communication function of the second target entity comprises RLC, MAC, and HIGH PHY, and the second target policy indicates that a communication function of the third target entity comprises LOW PHY;
the first target policy indicates that a communication function of the first target entity comprises RRC, PDCP, and RLC, the second target policy indicates that a communication function of the second target entity comprises MAC and HIGH PHY, and the second target policy indicates that a communication function of the third target entity comprises LOW PHY;
the first target policy indicates that a communication function of the first target entity comprises RRC, PDCP, RLC, and MAC, the second target policy indicates that a communication function of the second target entity comprises HIGH PHY, and the second target policy indicates that a communication function of the third target entity comprises LOW PHY; or
the first target policy indicates that a communication function of the first target entity comprises RRC, PDCP, RLC, MAC, and HIGH PHY, and the first target policy indicates that a communication function of the second target entity comprises LOW PHY.

6. The method according to any one of claims 1 to 5, wherein determining the first target policy and/or the second target policy comprises:
determining, for different terminals, the first target policy and/or the second target policy corresponding to any terminal;
determining, for different protocol data unit PDU sessions, the first target policy and/or the second target policy corresponding to any PDU session;
determining, for different QoS flows, the first target policy and/or the second target policy corresponding to any QoS flow;
determining, for different data radio bearers DRBs, the first target policy and/or the second target policy corresponding to any DRB; or
determining, for different data packets, the first target policy and/or the second target policy corresponding to any data packet.

7. The method according to any one of claims 1 to 6, wherein the method further comprises:
sending the at least one candidate function split manner; and/or
sending fifth information, wherein the fifth information indicates a communication function of each function entity corresponding to the candidate function split manner.

8. The method according to any one of claims 1 to 7, wherein the first function entity, the first target entity, the second target entity, and the third target entity are function entities that are independent of each other; or the first function entity is integrated into the first target entity, the second target entity, or the third target entity.

9. The method according to any one of claims 1 to 8, wherein the first target entity, the second target entity, and the third target entity are function entities in a radio access network RAN, a core network, and/or a network management domain.

10. The method according to claim 9, wherein the first target entity, the second target entity, and the third target entity are the function entities in the RAN, and the function entity in the RAN comprises at least one of the following function entities:
a central unit CU,
a distributed unit DU, or
a radio unit RU.

11. The method according to any one of claims 1 to 10, wherein the first information comprises at least one of the following parameters:
a first identifier, wherein the first identifier indicates the first target policy;
a second identifier, wherein the second identifier indicates the second target policy;
a function split manner corresponding to the first target policy;
a function split manner corresponding to the second target policy;
the communication function of the first target entity and the communication function of the second target entity that correspond to the first target policy;
the communication function of the second target entity and the communication function of the third target entity that correspond to the second target policy;
first granularity information of the first target policy; or
second granularity information of the second target policy.

12. The method according to claim 3, wherein the method further comprises:
obtaining the second information from the first target entity, the second target entity, and/or the third target entity, wherein
the second information comprises at least one of the following parameters:
a bandwidth resource of the communication interface,
a transmission delay of the communication interface,
a packet loss rate of the communication interface, or
reliability of the communication interface.

13. The method according to claim 3, wherein the method further comprises:
obtaining the third information from the first target entity, the second target entity, and/or the third target entity, wherein
the third information comprises at least one of the following parameters:
processor utilization,
memory utilization, or
disk utilization.

14. The method according to claim 3, wherein the method further comprises:
obtaining the fourth information from the first target entity, the second target entity, the third target entity, and/or a core network device, wherein
the fourth information comprises at least one of the following parameters:
a packet delay budget PDB,
a guaranteed bit rate GBR, or
a packet error rate PER.

15. The method according to any one of claims 1 to 14, wherein the communication function split manner is a manner of splitting a communication function corresponding to a protocol layer.

16. A communication method, wherein the method is applied to a second function entity, the second function entity comprises at least one of a first target entity, a second target entity, and a third target entity, and the method comprises:
receiving first information from a first function entity, wherein the first information indicates a first target policy and/or a second target, the first target policy indicates a communication function split manner of the first target entity and the second target entity, and the second target policy indicates a communication function split manner of the second target entity and the third target entity; and
configuring, based on the first information, a communication function corresponding to the second function entity.

17. The method according to claim 16, wherein the first target policy has an association relationship with a first target function split manner, and the first target function split manner is determined from at least one candidate function split manner; and/or
the second target policy has an association relationship with a second target function split manner, and the second target function split manner is determined from at least one candidate function split manner, wherein
the candidate function split manner is a communication function split manner of two communicatively connected second function entities of different types, and the second function entity comprises at least one of the first target entity, the second target entity, and the third target entity.

18. The method according to claim 16 or 17, wherein the first target policy and/or the second target policy are/is obtained in the following manner comprising:
obtaining the first target policy and/or the second target policy based on one or more of second information corresponding to a first interface, second information corresponding to a second interface, fourth information, third information corresponding to the first target entity, third information corresponding to the second target entity, and third information corresponding to the third target entity, wherein the first interface is a communication interface between the first target entity and the second target entity, the second interface is a communication interface between the second target entity and the third target entity, the second information indicates a network communication status corresponding to the communication interface, the third information indicates a processing resource status corresponding to the function entity, and the fourth information indicates a quality of service QoS requirement corresponding to at least one service.

19. The method according to claim 18, wherein obtaining the first target policy and/or the second target policy based on one or more of the second information corresponding to the first interface, the second information corresponding to the second interface, the fourth information, the third information corresponding to the first target entity, the third information corresponding to the second target entity, and the third information corresponding to the third target entity comprises:
obtaining the first target policy and/or the second target policy based on a relationship between at least one threshold and one or more of the second information corresponding to the first interface, the second information corresponding to the second interface, the fourth information, the third information corresponding to the first target entity, the third information corresponding to the second target entity, and the third information corresponding to the third target entity.

20. The method according to any one of claims 16 to 19, wherein the first target policy indicates that a communication function of the first target entity comprises radio resource control RRC, the second target policy indicates that a communication function of the second target entity comprises packet data convergence protocol PDCP, radio link control RLC, media access control MAC, and high physical layer HIGH PHY, and the second target policy indicates that a communication function of the third target entity comprises low physical layer LOW PHY;
the first target policy indicates that a communication function of the first target entity comprises RRC and PDCP, the second target policy indicates that a communication function of the second target entity comprises RLC, MAC, and HIGH PHY, and the second target policy indicates that a communication function of the third target entity comprises LOW PHY;
the first target policy indicates that a communication function of the first target entity comprises RRC, PDCP, and RLC, the second target policy indicates that a communication function of the second target entity comprises MAC and HIGH PHY, and the second target policy indicates that a communication function of the third target entity comprises LOW PHY;
the first target policy indicates that a communication function of the first target entity comprises RRC, PDCP, RLC, and MAC, the second target policy indicates that a communication function of the second target entity comprises HIGH PHY, and the second target policy indicates that a communication function of the third target entity comprises LOW PHY; or
the first target policy indicates that a communication function of the first target entity comprises RRC, PDCP, RLC, MAC, and HIGH PHY, and the first target policy indicates that a communication function of the second target entity comprises LOW PHY.

21. The method according to any one of claims 16 to 20, wherein the first target policy and/or the second target policy correspond/corresponds to any one of different terminals;
the first target policy and/or the second target policy correspond/corresponds to any one of different protocol data unit PDU sessions;
the first target policy and/or the second target policy correspond/corresponds to any one of different QoS flows;
the first target policy and/or the second target policy correspond/corresponds to any one of different data radio bearers DRBs; or
the first target policy and/or the second target policy correspond/corresponds to any one of different data packets.

22. The method according to any one of claims 16 to 21, wherein the method further comprises:
receiving the at least one candidate function split manner; and/or
receiving fifth information, wherein the fifth information indicates a communication function of each function entity corresponding to the candidate function split policy.

23. The method according to any one of claims 16 to 22, wherein the first function entity and the second function entity are function entities that are independent of each other, or the first function entity is integrated into the second function entity.

24. The method according to any one of claims 16 to 23, wherein the second function entity is a function entity in a radio access network RAN, a core network, and/or a network management domain.

25. The method according to claim 24, wherein the second function entity is the function entity in the RAN, and the second function comprises at least one of the following function entities:
a central unit CU,
a distributed unit DU, or
a radio unit RU.

26. The method according to any one of claims 16 to 25, wherein the first information comprises at least one of the following parameters:
a first identifier, wherein the first identifier indicates the first target policy;
a second identifier, wherein the second identifier indicates the second target policy;
a function split manner corresponding to the first target policy;
a function split manner corresponding to the second target policy;
the communication function of the first target entity and the communication function of the second target entity that correspond to the first target policy;
the communication function of the second target entity and the communication function of the third target entity that correspond to the second target policy;
first granularity information of the first target policy; or
second granularity information of the second target policy.

27. The method according to claim 18, wherein the method further comprises:
sending the second information, wherein
the second information comprises at least one of the following parameters:
a bandwidth resource of the communication interface,
a transmission delay of the communication interface,
a packet loss rate of the communication interface, or
reliability of the communication interface.

28. The method according to claim 18, wherein the method further comprises:
sending the third information, wherein
the third information comprises at least one of the following parameters:
processor utilization,
memory utilization, or
disk utilization.

29. The method according to claim 18, wherein the method further comprises:
sending the fourth information, wherein
the fourth information comprises at least one of the following parameters:
a packet delay budget PDB,
a guaranteed bit rate GBR, or
a packet error rate PER.

30. The method according to any one of claims 16 to 29, wherein the communication function split manner is a manner of splitting a communication function corresponding to a protocol layer.

31. A communication system, comprising a first function entity and a second function entity, wherein
the first function entity is configured to determine a first target policy and/or a second target policy, wherein the first target policy indicates a communication function split manner of a first target entity and a second target entity, and the second target policy indicates a communication function split manner of the second target entity and a third target entity;
the first function entity is further configured to send first information to the second function entity, wherein the first information indicates the first target policy and/or the second target policy, and the second function entity comprises the first target entity, the second target entity, and the third target entity; and
the second function entity is configured to configure, based on the first information, a communication function corresponding to the second function entity.

32. A communication apparatus, comprising a processing module and a communication module, wherein
the communication module is configured to: receive and/or send a signal, and the processing module is configured to enable the method according to any one of claims 1 to 15 to be performed, or the processing module is configured to enable the method according to any one of claims 16 to 30 to be performed.

33. A communication apparatus, comprising at least one processor and a communication interface, wherein the communication interface is configured to: receive and/or send a signal, and the processor is configured to enable the method according to any one of claims 1 to 15 to be performed, or the processor is configured to enable the method according to any one of claims 16 to 30 to be performed.

34. A communication apparatus, comprising at least one processor and a memory, wherein the memory is configured to store computer instructions, and the processor is configured to execute the computer instructions, to enable the communication apparatus to perform the method according to any one of claims 1 to 15, or enable the communication apparatus to perform the method according to any one of claims 16 to 30.

35. A computer-readable storage medium, wherein the computer-readable storage medium stores instructions or a program, and when the instructions or the program runs on a communication apparatus, the communication apparatus is enabled to perform the method according to any one of claims 1 to 15, or the communication apparatus is enabled to perform the method according to any one of claims 16 to 30.

36. A computer program product, wherein the computer program product comprises a computer program or instructions, and when the computer program or the instructions are run on a computer, the computer is enabled to perform the method according to any one of claims 1 to 15, or the computer is enabled to perform the method according to any one of claims 16 to 30.
